# EUROPEAN PATENT APPLICATION

(11) **EP 4 287 285 A1**
(43) Date of publication of application: **06.12.2023**
(21) Application number: 22745999.7
(22) Date of filing: 27.01.2022
(51) Int. Cl.: H01M 4/02, H01M 4/13, H01G 11/52, H01M 50/403, H01M 50/417, H01M 50/42, H01M 50/434, H01M 50/443, H01M 50/446

(54) **COMPOSITION FOR ELECTROCHEMICAL ELEMENT FUNCTIONAL LAYER, FUNCTIONAL LAYER FOR ELECTROCHEMICAL ELEMENT, LAMINATE FOR ELECTROCHEMICAL ELEMENT, AND ELECTROCHEMICAL ELEMENT**

(30) Priority: 29.01.2021 JP 2021013954
(71) Applicant: Zeon Corporation, Tokyo 100-8246 (JP)
(72) Inventor: OGIHARA, Tasuku, Tokyo 100-8246 (JP); HARADA, Ayumi, Tokyo 100-8246 (JP)
(74) Representative: Maiwald GmbH
(86) International application number: PCT/JP2022/003178
(87) International publication number: WO 2022/163780

(57) **Abstract**

A composition for an electrochemical device functional layer contains a binder, heat-resistant fine particles, and a particulate polymer that has a volume-average particle diameter of more than 1.0 µm and not more than 10.0 µm and that includes a polymer A including a (meth)acrylic acid ester monomer unit and an acidic group-containing monomer unit and a polymer B that is a different polymer from the polymer A.

## Description

### TECHNICAL FIELD

The present disclosure relates to a composition for an electrochemical device functional layer, a functional layer for an electrochemical device, a laminate for an electrochemical device, and an electrochemical device.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

A lithium ion secondary battery, for example, normally includes battery members such as a positive electrode, a negative electrode, and a separator that isolates the positive electrode and the negative electrode from each other and prevents short-circuiting between the positive and negative electrodes.

In recent years, further improvements to electrochemical device members such as positive electrodes, negative electrodes, and separators have been studied with the aim of achieving even higher lithium ion secondary battery performance. In the course of such improvements, stacking of a layer for displaying an expected function such as heat resistance or adhesiveness (i.e., a functional layer) on a separator substrate has been attempted.

As one specific example, Patent Literature (PTL) 1 discloses a technique in which a functional layer for an electrochemical device that contains inorganic particles and a particulate polymer, that has a surface maximum height Sz of not less than a specific value, and that has a protrusion containing the particulate polymer at the surface is formed on a separator substrate. As another example, PTL 2 discloses a heat-resistant layer and an adhesive layer that contains a particulate polymer having a glass-transition temperature of 10°C to 100°C being formed on an organic separator layer so as to obtain a separator for a secondary battery having excellent heat resistance, adhesiveness, and blocking resistance. As yet another example, PTL 3 discloses a binder composition for a non-aqueous secondary battery porous membrane containing a particulate polymer A and a particulate polymer B having a larger volume-average particle diameter than the particulate polymer A, wherein the particulate polymer A includes a (meth)acrylic acid alkyl ester monomer unit in a proportion of not less than 50 mass% and not more than 90 mass%, and the particulate polymer B has a core-shell structure and includes a nitrile group-containing monomer unit in a core portion of this core-shell structure.

### CITATION LIST

### Patent Literature

PTL 1: WO2020/246394A1
PTL 2: WO2013/151144A1
PTL 3: WO2018/198940A1

### SUMMARY

### (Technical Problem)

In recent years, there has been demand for a functional layer included in an electrochemical device member to have high levels of both adhesiveness between members during a production process of an electrochemical device (hereinafter, also referred to as "process adhesiveness") and also blocking resistance from a viewpoint of further increasing electrochemical device production efficiency. Note that "blocking resistance" of a functional layer refers to a property of inhibiting unintended adhesion (blocking) from occurring at a timing at which the functional layer is in a stacked state with another member without the aim of adhesion during a production process of an electrochemical device.

However, it has not been possible to achieve sufficiently high levels of both process adhesiveness and blocking resistance in an obtained functional layer when a functional layer is formed according to the conventional techniques described above.

Accordingly, one object of the present disclosure is to provide a composition for an electrochemical device functional layer that enables sufficiently high levels of both process adhesiveness and blocking resistance in an obtained functional layer.

Another object of the present disclosure is to provide a functional layer for an electrochemical device having excellent process adhesiveness and blocking resistance, a laminate for an electrochemical device including this functional layer for an electrochemical device, and an electrochemical device including this laminate for an electrochemical device.

### (Solution to Problem)

The inventors conducted diligent investigation to achieve the objects set forth above. The inventors made a new discovery that in the case of a functional layer that is formed using a composition for an electrochemical device functional layer containing a binder, heat-resistant fine particles, and a particulate polymer that has a volume-average particle diameter of more than 1.0 µm and not more than 10.0 µm and that includes a polymer A including a (meth)acrylic acid ester monomer unit and an acidic group-containing monomer unit and a polymer B that is a different polymer from the polymer A, this functional layer has excellent process adhesiveness and blocking resistance. In this manner, the inventors completed the present disclosure.

Specifically, the present disclosure aims to advantageously solve the problem set forth above, and a presently disclosed composition for an electrochemical device functional layer comprises a particulate polymer, a binder, and heat-resistant fine particles, wherein the particulate polymer includes a polymer A and a polymer B, the polymer A is a polymer including a (meth)acrylic acid ester monomer unit and an acidic group-containing monomer unit, the polymer B is a polymer having a different chemical composition from the polymer A, and the particulate polymer has a volume-average particle diameter of more than 1.0 µm and not more than 10.0 µm. Through a composition for an electrochemical device functional layer containing a binder, heat-resistant fine particles, and a particulate polymer that includes a polymer A including a (meth)acrylic acid ester monomer unit and an acidic group-containing monomer unit and a polymer B and that has a volume-average particle diameter within a specific range in this manner, it is possible to form a functional layer having excellent process adhesiveness and blocking resistance.

Note that in the present specification, "(meth)acryl" is used to indicate "acryl" or "methacryl".

Also note that the volume-average particle diameter of particles referred to in the present specification is the particle diameter D50 at which cumulative volume calculated from a small diameter end reaches 50% according to a laser diffraction method and can be measured by a method described in the EXAMPLES section.

Moreover, when a polymer is said to "include a monomer unit" in the present specification, this means that "a polymer obtained using that monomer includes a structural unit derived from the monomer".

In the presently disclosed composition for an electrochemical device functional layer, the acidic group-containing monomer unit of the polymer A is preferably a (meth)acrylic acid monomer unit. When the acidic group-containing monomer unit of the polymer A is a (meth)acrylic acid monomer unit, a functional layer having even better process adhesiveness and blocking resistance can be formed.

In the presently disclosed composition for an electrochemical device functional layer, the polymer A preferably has a glass-transition temperature of not lower than 60°C and not higher than 85°C. When the glass-transition temperature of the polymer A is within the range set forth above, a functional layer having even better process adhesiveness and blocking resistance can be formed.

Note that the glass-transition temperature of a polymer can be measured according to a method described in the EXAMPLES section of the present specification.

In the presently disclosed composition for an electrochemical device functional layer, the polymer A preferably has an acid value of not less than 0.5 mg KOH/g and not more than 7 mg KOH/g. When the acid value of the polymer A is not less than 0.5 mg KOH/g and not more than 7 mg KOH/g, slurry stability of the composition for a functional layer increases, and process adhesiveness and blocking resistance of an obtained functional layer can be further increased.

Note that the acid value of the polymer A can be measured according to a method described in the EXAMPLES section of the present specification.

In the presently disclosed composition for an electrochemical device functional layer, the polymer A preferably has a weight-average molecular weight of not less than 5,000 and not more than 100,000. When the weight-average molecular weight of the polymer A is not less than 5,000 and not more than 100,000, a functional layer having even better process adhesiveness and blocking resistance can be formed.

Note that the weight-average molecular weight of the polymer A can be measured according to a method described in the EXAMPLES section.

In the presently disclosed composition for an electrochemical device functional layer, the particulate polymer preferably includes the polymer A in a proportion of not less than 0.1 mass% and not more than 10 mass% based on the particulate polymer. When the proportion constituted by the polymer A in the particulate polymer is within the range set forth above, slurry stability of the composition for a functional layer increases, and process adhesiveness and blocking resistance of an obtained functional layer can be further increased.

In the presently disclosed composition for an electrochemical device functional layer, the polymer B preferably includes an aromatic vinyl monomer unit. When the polymer B includes an aromatic vinyl monomer unit, process adhesiveness of an obtained functional layer can be further increased.

In the presently disclosed composition for an electrochemical device functional layer, it is preferable that the heat-resistant fine particles are inorganic fine particles, and the inorganic fine particles have a volume-average particle diameter that is not less than 2% and not more than 25% of the volume-average particle diameter of the particulate polymer. When the volume-average particle diameter of inorganic fine particles serving as the heat-resistant fine particles is not less than 2% and not more than 25% of the volume-average particle diameter of the particulate polymer, a functional layer having excellent heat shrinkage resistance can be formed, and output characteristics of an obtained electrochemical device can be enhanced.

In the presently disclosed composition for an electrochemical device functional layer, the binder is preferably a polymer including a (meth)acrylic acid ester monomer unit and having a different chemical composition from the polymer A and the polymer B. When the binder is a polymer that includes a (meth)acrylic acid ester monomer unit, process adhesiveness of a functional layer can be further increased, and electrochemical characteristics of an obtained electrochemical device can be enhanced.

Moreover, the present disclosure aims to advantageously solve the problem set forth above, and a presently disclosed functional layer for an electrochemical device is formed using any one of the compositions for an electrochemical device functional layer set forth above. A functional layer that is formed using the presently disclosed composition for an electrochemical device functional layer in this manner has excellent process adhesiveness and blocking resistance.

It is preferable that the presently disclosed functional layer for an electrochemical device has a structure in which the particulate polymer is partially embedded in a heat-resistant fine particle layer that contains the heat-resistant fine particles, and a ratio of the volume-average particle diameter of the particulate polymer relative to thickness of the heat-resistant fine particle layer is not less than 1.0 and not more than 5.0. When the ratio of the volume-average particle diameter of the particulate polymer relative to the thickness of the heat-resistant fine particle layer is not less than 1.0 and not more than 5.0, process adhesiveness of the functional layer can be increased.

Note that the ratio of the volume-average particle diameter of the particulate polymer relative to the thickness of the heat-resistant fine particle layer can be measured according to a method described in the EXAMPLES section of the present specification.

The presently disclosed composition for an electrochemical device functional layer may further comprise, as the heat-resistant fine particles, organic fine particles that have a volume-average particle diameter that is not less than 50% and not more than 150% of the volume-average particle diameter of the particulate polymer and that have a glass-transition temperature or melting point of 150°C or higher or do not have a glass-transition temperature or melting point within a range of 200°C or lower. When the composition for a functional layer further contains specific organic fine particles, blocking resistance of an obtained functional layer can be further increased.

In the presently disclosed composition for an electrochemical device functional layer, an amount of the organic fine particles is preferably not less than 20 parts by mass and not more than 1,000 parts by mass relative to the particulate polymer. When the amount of the organic fine particles is within the range set forth above, blocking resistance and process adhesiveness of an obtained functional layer can be further increased.

In a functional layer for an electrochemical device that is formed using the presently disclosed composition for a functional layer that contains organic fine particles as the heat-resistant fine particles, it is preferable that the functional layer for an electrochemical device has a structure in which the particulate polymer and the organic fine particles serving as the heat-resistant fine particles are partially embedded in a heat-resistant fine particle layer that contains the heat-resistant fine particles, and a ratio of the volume-average particle diameter of the particulate polymer relative to thickness of the heat-resistant fine particle layer is not less than 1.0 and not more than 5.0. A functional layer for an electrochemical device that satisfies this condition maintains good process adhesiveness while also having even better blocking resistance.

Moreover, the present disclosure aims to advantageously solve the problem set forth above, and a presently disclosed laminate for an electrochemical device comprises: a substrate; and a functional layer formed using any one of the compositions for an electrochemical device functional layer set forth above on the substrate. A laminate for an electrochemical device that includes a functional layer formed using the presently disclosed composition for an electrochemical device functional layer in this manner has excellent process adhesiveness and blocking resistance.

Furthermore, the present disclosure aims to advantageously solve the problem set forth above, and a presently disclosed electrochemical device comprises the laminate for an electrochemical device set forth above. An electrochemical device that includes the presently disclosed laminate for an electrochemical device has excellent electrochemical characteristics.

### (Advantageous Effect)

According to the present disclosure, it is possible to provide a composition for an electrochemical device functional layer that enables sufficiently high levels of both process adhesiveness and blocking resistance in an obtained functional layer.

Moreover, according to the present disclosure, it is possible to provide a functional layer for an electrochemical device having excellent process adhesiveness and blocking resistance, a laminate for an electrochemical device including this functional layer for an electrochemical device, and an electrochemical device including this laminate for an electrochemical device.

### DETAILED DESCRIPTION

The following provides a detailed description of embodiments of the present disclosure. The presently disclosed composition for an electrochemical device functional layer (hereinafter, also referred to simply as a "composition for a functional layer") is used in formation of the presently disclosed functional layer for an electrochemical device (hereinafter, also referred to simply as a "functional layer"). Moreover, the presently disclosed laminate for an electrochemical device includes the presently disclosed functional layer. Furthermore, the presently disclosed electrochemical device is an electrochemical device that includes at least the presently disclosed laminate for an electrochemical device.

### (Composition for electrochemical device functional layer)

The presently disclosed composition for an electrochemical device functional layer contains a specific particulate polymer, a binder, and heat-resistant fine particles and can optionally further contain other components. By using the presently disclosed composition for a functional layer, it is possible to achieve sufficiently high levels of both process adhesiveness and blocking resistance in an obtained functional layer.

### <Particulate polymer>

As described in detail below, the particulate polymer that is contained in the composition for a functional layer includes a polymer A including a (meth)acrylic acid ester monomer unit and an acidic group-containing monomer unit and a polymer B having a different chemical composition from the polymer A, and this particulate polymer has a volume-average particle diameter that is within a specific range. Note that the particulate polymer may have a particulate form or may have any other form after members have been adhered via a functional layer formed using the composition for a functional layer. Also note that the presence of the polymer A and the polymer B included in the particulate polymer can be confirmed through detection of two peaks or shoulders upon analysis of the composition for a functional layer by GPC (Gel Permeation Chromatography), for example.

### «Polymer A»

The polymer A is a polymer that is required to include a (meth)acrylic acid ester monomer unit and an acidic group-containing monomer unit, and that can optionally include other monomer units. In other words, the polymer A is required to include an acidic group-containing monomer unit in addition to either or both of an acrylic acid ester monomer unit and a methacrylic acid ester monomer unit. As a result of the polymer A including these specific monomer units, it is possible to form a functional layer having excellent process adhesiveness and blocking resistance.

### [(Meth)acrylic acid ester monomer unit]

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Of these (meth)acrylic acid ester monomers, n-butyl acrylate, 2-ethylhexyl acrylate, and methyl methacrylate are preferable.

Note that one of these (meth)acrylic acid ester monomers may be used individually, or two or more of these (meth)acrylic acid ester monomers may be used in combination in a freely selected ratio.

The proportional content of (meth)acrylic acid ester monomer units in the polymer A when all repeating units included in the polymer A are taken to be 100 mass% is preferably 5 mass% or more, and more preferably 50 mass% or more, and is preferably 99.9 mass% or less. When the proportional content of (meth)acrylic acid ester monomer units in the polymer A is not less than any of the lower limits set forth above, process adhesiveness of an obtained functional layer can be further improved. When the proportional content of (meth)acrylic acid ester monomer units is not more than the upper limit set forth above, slurry stability can be increased.

### [Acidic group-containing monomer unit]

Examples of acidic group-containing monomers that can be used to form an acidic group-containing monomer unit include carboxy group-containing monomers, sulfo group-containing monomers, phosphate group-containing monomers, and hydroxy group-containing monomers. In particular, a carboxy group-containing monomer unit is preferable as an acidic group-containing monomer unit of the polymer A, and a (meth)acrylic acid monomer unit is more preferable as an acidic group-containing monomer unit of the polymer A. When a carboxy group-containing monomer unit, and particularly a (meth)acrylic acid monomer unit is adopted as an acidic group-containing monomer unit of the polymer A, a functional layer having even better process adhesiveness and blocking resistance can be formed.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, 3-allyloxy-2-hydroxypropane sulfonic acid, p-styrene sulfonic acid, and salts thereof.

Note that in the present specification, "(meth)allyl" is used to indicate "allyl" and/or "methallyl", whereas "(meth)acryl" is used to indicate "acryl" and/or "methacryl".

Examples of phosphate group-containing monomers include 2-(meth)acryl oyl oxyethyl phosphate, methyl-2-(meth)acryloyloxyethyl phosphate, and ethyl-(meth)acryloyloxyethyl phosphate.

Note that in the present specification, "(meth)acryloyl" is used to indicate "acryloyl" and/or "methacryloyl".

Examples of hydroxy group-containing monomers include 2-hydroxyethyl acrylate, 2-hydroxypropyl acrylate, 2-hydroxyethyl methacrylate, and 2-hydroxypropyl methacrylate.

Note that one of these acidic group-containing monomers may be used individually, or two or more of these acidic group-containing monomers may be used in combination in a freely selected ratio.

The proportional content of acidic group-containing monomer units in the polymer A is not specifically limited, but when all repeating units included in the polymer A are taken to be 100 mass%, the proportional content of acidic group-containing monomer units is preferably 0.1 mass% or more, and more preferably 0.2 mass% or more, and is preferably 5 mass% or less, more preferably 1 mass% or less, and even more preferably 0.5 mass% or less. When the proportional content of acidic group-containing monomer units in the polymer A is not less than any of the lower limits set forth above, slurry stability of the composition for a functional layer can be increased, and blocking resistance of an obtained functional layer can be further increased. Moreover, when the proportional content of acidic group-containing monomer units in the polymer A is not more than any of the upper limits set forth above, stability during production of the particulate polymer can be increased.

### [Other monomer units]

Examples of monomers that can be used to form other monomer units include, but are not specifically limited to, aromatic vinyl monomers subsequently described as monomers that can be used to form an "aromatic vinyl monomer unit" that can be included in the polymer B.

The proportional content of other monomer units in the polymer A is not specifically limited, but when all repeating units included in the polymer A are taken to be 100 mass%, the proportional content of other monomer units is preferably 95 mass% or less, and may be 0 mass% (i.e., the polymer A may be a polymer that does not include other monomer units).

### «Glass-transition temperature of polymer A»

The glass-transition temperature of the polymer A is preferably 60°C or higher, and more preferably 70°C or higher, and is preferably 85°C or lower, and more preferably 77°C or lower. When the glass-transition temperature of the polymer A is not lower than any of the lower limits set forth above, blocking resistance of an obtained functional layer can be increased. Moreover, when the glass-transition temperature of the polymer A is not higher than any of the upper limits set forth above, process adhesiveness of an obtained functional layer can be further increased.

Note that the glass-transition temperature of the polymer A can be adjusted by altering the chemical composition of the polymer A.

### <<Acid value of polymer A»

The acid value of the polymer A is preferably 0.5 mg KOH/g or more, more preferably 1.0 mg KOH/g or more, and even more preferably 1.5 mg KOH/g or more, and is preferably 7.0 mg KOH/g or less, more preferably 6.0 mg KOH/g or less, and even more preferably 4.0 mg KOH/g or less. When the acid value of the polymer A is not less than any of the lower limits set forth above, slurry stability of the composition for a functional layer can be increased, and blocking resistance and process adhesiveness of an obtained functional layer can be further increased. When the acid value of the polymer A is not more than any of the upper limits set forth above, stability of the particulate polymer can be increased. Note that the acid value of the polymer A can be controlled based on the proportion in which acidic group-containing monomer units are compounded in production of the polymer A.

### <<Weight-average molecular weight of polymer A»

The weight-average molecular weight of the polymer A is preferably 5,000 or more, more preferably 6,000 or more, and even more preferably 7,000 or more, and is preferably 100,000 or less, more preferably 50,000 or less, and even more preferably 45,000 or less. When the weight-average molecular weight of the polymer A is not less than any of the lower limits set forth above, blocking resistance of a functional layer can be further increased. Moreover, when the weight-average molecular weight of the polymer A is not more than any of the upper limits set forth above, process adhesiveness of a functional layer can be further increased. Note that the weight-average molecular weight of the polymer A can be controlled based on the composition ratio of monomers added in polymerization of the polymer A, the amount of polymerization initiator, and so forth.

### <<Content of polymer A»

The content of the polymer A in the particulate polymer is preferably 0.1 mass% or more, more preferably 0.2 mass% or more, and even more preferably 0.5 mass% or more based on the particulate polymer, and is preferably 10 mass% or less, more preferably 8.0 mass% or less, and even more preferably 5.0 mass% or less based on the particulate polymer. When the content of the polymer A is not less than any of the lower limits set forth above, slurry stability of the composition for a functional layer can be increased, and blocking resistance of a functional layer can be further increased. When the content of the polymer A is not more than any of the upper limits set forth above, process adhesiveness of a functional layer can be further increased.

### «Polymer B»

The polymer B is a polymer having a different chemical composition from the above-described polymer A. The chemical composition of the polymer B is not specifically limited so long as it is different from that of the polymer A. The polymer B may, for example, include an aromatic vinyl monomer unit and other monomer units that can include a (meth)acrylic acid ester monomer unit, a cross-linkable monomer unit, and so forth. In particular, it is preferable that the polymer B includes an aromatic vinyl monomer unit from a viewpoint of further increasing process adhesiveness of an obtained functional layer.

### [Aromatic vinyl monomer unit]

Examples of aromatic vinyl monomers that can be used to form an aromatic vinyl monomer unit include, but are not specifically limited to, styrene, α-methylstyrene, butoxystyrene, and vinylnaphthalene, of which, styrene is preferable. Note that one of these aromatic vinyl monomers may be used individually, or two or more of these aromatic vinyl monomers may be used in combination in a freely selected ratio.

The proportional content of aromatic vinyl monomer units in the polymer B when all repeating units included in the polymer B are taken to be 100 mass% is preferably 20 mass% or more, and is preferably 90 mass% or less, and more preferably 85 mass% or less. When the proportional content of aromatic vinyl monomer units in the polymer B is within any of the ranges set forth above, good close adherence between a functional layer and a substrate can be achieved.

### [(Meth)acrylic acid ester monomer unit]

Examples of (meth)acrylic acid ester monomers that can form a (meth)acrylic acid ester monomer unit include the same (meth)acrylic acid ester monomers as were previously described. Of these (meth)acrylic acid ester monomers, octyl acrylate such as 2-ethylhexyl acrylate is preferable. One of these (meth)acrylic acid ester monomers may be used individually, or two or more of these (meth)acrylic acid ester monomers may be used in combination in a freely selected ratio.

The proportional content of (meth)acrylic acid ester monomer units in the polymer B when all repeating units included in the polymer B are taken to be 100 mass% is preferably 10 mass% or more, and more preferably 15 mass% or more, and is preferably 80 mass% or less, and more preferably 75 mass% or less. When the proportional content of (meth)acrylic acid ester monomer units in the polymer B is not less than any of the lower limits set forth above, excessive lowering of the glass-transition temperature of the polymer B can be inhibited, and blocking resistance of an obtained functional layer can be improved. When the proportional content of (meth)acrylic acid ester monomer units is not more than any of the upper limits set forth above, good close adherence between a functional layer and a substrate can be achieved.

### [Cross-linkable monomer unit]

Examples of monomers that can form a cross-linkable monomer unit include polyfunctional monomers having at least two groups displaying polymerization reactivity. Examples of such polyfunctional monomers include divinyl compounds such as allyl methacrylate and divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; and epoxy group-containing ethylenically unsaturated monomers such as allyl glycidyl ether and glycidyl methacrylate. One of these cross-linkable monomers may be used individually, or two or more of these cross-linkable monomers may be used in combination. Of these cross-linkable monomers, ethylene glycol dimethacrylate is preferable.

The proportional content of cross-linkable monomer units in the polymer B when all repeating units included in the polymer B are taken to be 100 mass% is preferably not less than 0.05 mass% and not more than 2 mass%. When the proportional content of cross-linkable monomer units in the polymer B is within the range set forth above, process adhesiveness of an obtained functional layer can be increased.

### [Monomer units other than described above]

Examples of monomers that can be used to form monomer units other than those described above (i.e., monomer units other than an aromatic vinyl monomer unit, a (meth)acrylic acid ester monomer unit, and a cross-linkable monomer unit) include acidic group-containing monomers.

Examples of acidic group-containing monomers that can be used to form an acidic group-containing monomer unit include, but are not specifically limited to, the same acidic group-containing monomers as previously described.

Although no specific limitations are placed on the proportional content of monomer units other than those described above in the polymer B, the proportional content of monomer units other than those described above when all repeating units included in the polymer B are taken to be 100 mass% is preferably 10 mass% or less, and may be 0 mass% (i.e., the polymer B may be a polymer that does not include monomer units other than those described above).

In particular, it is preferable that the polymer B does not include an acidic group-containing monomer unit or includes an acidic group-containing monomer unit in a proportion of less than 0.1 mass%. When the proportional content of acidic group-containing monomer units in the polymer B is not more than the upper limit set forth above, stability during production of the particulate polymer can be increased.

### «Glass-transition temperature of polymer B»

The glass-transition temperature of the polymer B is preferably 20°C or higher, more preferably 30°C or higher, even more preferably 40°C or higher, and further preferably 45°C or higher, and is preferably 100°C or lower, more preferably 80°C or lower, and even more preferably 70°C or lower. When the glass-transition temperature of the polymer B is not lower than any of the lower limits set forth above, blocking resistance of an obtained functional layer can be increased. Moreover, when the glass-transition temperature of the polymer B is not higher than any of the upper limits set forth above, process adhesiveness of an obtained functional layer can be further increased.

Note that the "glass-transition temperature" of the polymer B can be measured according to a method described in the EXAMPLES section. Moreover, the glass-transition temperature of the polymer B can be adjusted by altering the chemical composition of the polymer B. More specifically, the glass-transition temperature of the polymer B can be raised by increasing the amount of cross-linkable monomer units used in production of the polymer B, for example.

### <<Acid value of polymer B»

The acid value of the polymer B is preferably lower than that of the polymer A, and, more specifically, is preferably less than 0.5 mg KOH/g. Note that no specific limitations are placed on the lower limit for the acid value of the polymer B. When the acid value of the polymer B is lower than that of the polymer A, slurry stability of the composition for a functional layer can be increased, and blocking resistance and process adhesiveness of an obtained functional layer can be further increased.

### <<Structure of particulate polymer>>

The particulate polymer preferably has a structure in which the polymer A is concentrated more toward the surface than toward the center. This structure is not specifically limited so long as the polymer A is more abundant at the surface of the particulate polymer than at the center of the particulate polymer. When the polymer A is concentrated toward the surface in the particulate polymer, slurry stability of the composition for a functional layer increases, and process adhesiveness and blocking resistance of an obtained functional layer can be further increased. Although the reason for this is not clear, it is presumed that when the polymer A is concentrated toward the surface in the particulate polymer, electrostatic repulsions can arise between particles of the particulate polymer due to the polymer A that includes an acidic group-containing monomer unit being present in a comparatively large quantity at the surface of the particulate polymer. This is thought to inhibit aggregation and sedimentation of the particulate polymer in the composition for a functional layer and to increase slurry stability. Moreover, it is thought that as a result of the particulate polymer that has a large volume-average particle diameter of 1.0 µm or more being present at the surface of a functional layer when a functional layer is formed, electrostatic repulsions between particles of the particulate polymer reduce the tendency of functional layer blocking to occur in a situation in which a plurality of functional layers are placed in a state in contact with one another.

In one example, the particulate polymer may have a core-shell structure including a core portion and a shell portion that at least partially covers an outer surface of the core portion. Note that a "core-shell structure" of a particulate polymer can be confirmed through observation of the particulate polymer using a scanning electron microscope. The shell portion may completely cover the outer surface of the core portion or may partially cover the outer surface of the core portion. In a case in which the particulate polymer has a core-shell structure, the shell portion is preferably formed of the polymer A. Moreover, in this case, the core portion is preferably formed of the polymer B. It is thought that when the particulate polymer is a core-shell polymer including a shell portion that is formed of the polymer A, slurry stability of the composition for a functional layer increases, and process adhesiveness and blocking resistance of an obtained functional layer can be further increased.

### «Volume-average particle diameter of particulate polymer»

The volume-average particle diameter of the particulate polymer is required to be not less than 1.0 µm and not more than 10.0 µm, is preferably 2.0 µm or more, more preferably 2.5 µm or more, and even more preferably 3.0 µm or more, and is preferably 9.0 µm or less, more preferably 8.0 µm or less, and even more preferably 7.5 µm or less. When the volume-average particle diameter of the particulate polymer is within any of the ranges set forth above, process adhesiveness of an obtained functional layer can be further increased. Although the reason for this is not clear, it is thought that when the volume-average particle diameter of the particulate polymer is not less than any of the lower limits set forth above, a portion of the particulate polymer can be caused to protrude from the surface of a functional layer, thereby enabling higher process adhesiveness at the functional layer surface. It is also thought that when the volume-average particle diameter of the particulate polymer is not more than any of the upper limits set forth above, detachment of the particulate polymer from a functional layer during formation of the functional layer can be inhibited, and process adhesiveness of the obtained functional layer can be increased.

Note that the volume-average particle diameter of the particulate polymer can be adjusted through the type and amount of a metal hydroxide used in production of the particulate polymer, for example.

### [Production of particulate polymer]

The particulate polymer can be produced through polymerization of a monomer composition that contains the monomers described above, carried out in an aqueous solvent such as water, for example. The proportion constituted by each monomer in the monomer composition is normally the same as the proportion constituted by each monomer unit in the particulate polymer.

The method of polymerization is not specifically limited and may, for example, be suspension polymerization, emulsion polymerization and aggregation, pulverization, or the like. Of these methods, suspension polymerization and emulsion polymerization and aggregation are preferable from a viewpoint of simplicity and cost effectiveness, and suspension polymerization is more preferable. The polymerization reaction may be radical polymerization, living radical polymerization, or the like.

### [Other compounding agents]

The monomer composition used in production of the particulate polymer may have other compounding agents such as chain transfer agents, polymerization regulators, polymerization reaction retardants, reactive fluidizers, fillers, flame retardants, antioxidants, and colorants compounded therewith in any amount.

The following describes, as one example, a production method for when the particulate polymer is produced by suspension polymerization. Through the polymerization method given as an example below, it is possible to efficiently produce a particulate polymer having a structure in which the polymer A is concentrated toward the center.

### [Production of particulate polymer by suspension polymerization]

### (1) Preparation of polymer A and production of monomer composition for polymer B

First, the polymer A is prepared through polymerization according to a standard method. In addition, a monomer composition (B) having a chemical composition corresponding to the chemical composition of the polymer B is prepared. In this preparation, various monomers are compounded in accordance with the chemical composition of the polymer B, and other compounding agents that are added as necessary are also mixed therewith.

### (2) Formation of droplets

Next, a colloidal dispersion liquid containing a dispersion stabilizer is produced, the polymer A and monomer composition (B) obtained as described above are charged thereto, and a polymerization initiator is added to obtain a mixture, and then mixed droplets containing the polymer A and the monomer composition (B) are formed in the colloidal dispersion liquid containing the dispersion stabilizer. No specific limitations are placed on the method by which the mixed droplets are formed. For example, a method in which shear stirring is performed using a disperser such as an emulsifying/dispersing device may be adopted.

The polymerization initiator that is used may be an oil-soluble polymerization initiator such as t-butyl peroxy-2-ethylhexanoate or azobisisobutyronitrile, for example. Moreover, the dispersion stabilizer may be sodium dodecylbenzenesulfonate, a metal hydroxide such as magnesium hydroxide, or the like.

### (3) Polymerization

Once mixed droplets have been formed, the water containing the formed mixed droplets is heated so as to initiate polymerization. Polymerization is continued until the polymerization conversion rate is sufficiently high to thereby form a particulate polymer in water. The reaction temperature during polymerization is preferably not lower than 50°C and not higher than 95°C. Moreover, the reaction time during polymerization is preferably not less than 1 hour and not more than 10 hours, and is preferably 8 hours or less, and more preferably 6 hours or less.

### (4) Washing, filtration, dehydration, and drying step

Once polymerization has ended, the water containing the particulate polymer may be subjected to washing, filtration, and drying by standard methods to obtain the particulate polymer.

### <Binder>

The binder binds the heat-resistant fine particles to one another in a functional layer. The binder may be a known polymer that is used as a binder such as a conjugated diene polymer, an acrylic polymer, polyvinylidene fluoride (PVDF), or polyvinyl alcohol (PVOH), for example. One binder may be used individually, or two or more binders may be used in combination. The binder is preferably a water-insoluble polymer such as a conjugated diene polymer, an acrylic polymer, or polyvinylidene fluoride (PVDF) that can be dispersed in a dispersion medium such as water, is more preferably a conjugated diene polymer or an acrylic polymer, and is even more preferably an acrylic polymer that includes a (meth)acrylic acid ester monomer unit. When the binder is an acrylic polymer that includes a (meth)acrylic acid ester monomer unit, process adhesiveness of a functional layer can be further increased, and electrochemical characteristics of an obtained electrochemical device can be enhanced.

Note that when a polymer is said to be "water-insoluble" in the present disclosure, this means that when 0.5 g of the polymer is dissolved in 100 g of water at a temperature of 25°C, insoluble content is 90 mass% or more.

Also note that one of these binders may be used individually, or two or more of these binders may be used in combination in a freely selected ratio.

The term "conjugated diene polymer" as used here refers to a polymer that includes a conjugated diene monomer unit. Specific examples of conjugated diene polymers include, but are not specifically limited to, copolymers that include an aromatic vinyl monomer unit and an aliphatic conjugated diene monomer unit such as styrene-butadiene copolymer (SBR); butadiene rubber (BR); acrylic rubber (NBR) (copolymer including an acrylonitrile unit and a butadiene unit); and hydrogenated products thereof.

An acrylic polymer that can preferably be used as the binder may, for example, be a polymer that includes a cross-linkable monomer unit, a (meth)acrylic acid ester monomer unit, and an acidic group-containing monomer unit such as previously described, but is not specifically limited thereto.

The proportion constituted by (meth)acrylic acid ester monomer units in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less. Through the proportion constituted by (meth)acrylic acid ester monomer units being not less than the lower limit of any of the ranges set forth above, process adhesiveness of a functional layer can be increased. Moreover, through the proportion being not more than any of the upper limits set forth above, electrochemical characteristics of an electrochemical device that includes a functional layer can be further enhanced.

The proportion constituted by cross-linkable monomer units in the acrylic polymer is preferably 0.1 mass% or more, and more preferably 1.0 mass% or more, and is preferably 3.0 mass% or less, and more preferably 2.5 mass% or less. Through the proportion constituted by cross-linkable monomer units being not less than any of the lower limits set forth above, electrochemical characteristics of an electrochemical device that includes a functional layer can be further enhanced. Moreover, through the proportion constituted by cross-linkable monomer units being not more than any of the upper limits set forth above, adhesiveness of a functional layer can be increased.

The proportion constituted by acid group-containing monomer units in the acrylic polymer is preferably 0.1 mass% or more, more preferably 0.3 mass% or more, and even more preferably 0.5 mass% or more, and is preferably 20 mass% or less, more preferably 10 mass% or less, and even more preferably 5 mass% or less. Through the proportion constituted by acid group-containing monomer units being not less than any of the lower limits set forth above, dispersibility of the binder in the composition for a functional layer and in a functional layer can be increased, and electrochemical characteristics of an electrochemical device that includes a functional layer can be sufficiently enhanced. Moreover, through the proportion constituted by acid group-containing monomer units being not more than any of the upper limits set forth above, residual water content in a functional layer can be reduced, and electrochemical characteristics of an electrochemical device can be sufficiently enhanced.

Note that the acrylic polymer may also include other monomer units.

### «Glass-transition temperature of binder»

The glass-transition temperature (Tg) of the binder is preferably -100°C or higher, more preferably -90°C or higher, and even more preferably -80°C or higher, and is preferably lower than 30°C, more preferably 20°C or lower, and even more preferably 15°C or lower. When the glass-transition temperature of the binder is not lower than any of the lower limits set forth above, adhesiveness and strength of a functional layer can be increased. On the other hand, when the glass-transition temperature of the binder is not higher than any of the upper limits set forth above, flexibility of a functional layer can be increased.

### [Content of binder]

The content of the binder is preferably 0.1 parts by mass or more, more preferably 0.2 parts by mass or more, and even more preferably 0.5 parts by mass or more per 100 parts by mass of the heat-resistant fine particles, and is preferably 20 parts by mass or less, more preferably 15 parts by mass or less, and even more preferably 10 parts by mass or less per 100 parts by mass of the heat-resistant fine particles. When the content of the binder is not less than any of the lower limits set forth above, detachment of the particulate polymer from a functional layer can be sufficiently prevented, and adhesiveness of the functional layer can be sufficiently increased. On the other hand, when the content of the binder is not more than any of the upper limits set forth above, reduction of ion conductivity of a functional layer can be inhibited, and deterioration of rate characteristics of an electrochemical device can be inhibited.

The binder can be produced through polymerization of a monomer composition that contains the monomers described above, carried out in an aqueous solvent such as water, for example, but is not specifically limited to being produced in this manner. The proportion constituted by each monomer in the monomer composition is normally the same as the proportion constituted by each monomer unit in the binder.

The polymerization method and the polymerization reaction are not specifically limited and may, for example, be any of the polymerization methods and polymerization reactions given as examples for the polymerization method of the previously described particulate polymer.

Moreover, although the binder may have a particulate form or may have a non-particulate form, it is preferable that the binder has a particulate form from a viewpoint that detachment of components contained in a functional layer can be inhibited well.

In a case in which the binder has a particulate form, the volume-average particle diameter of the binder can be not less than 0.1 µm and not more than 0.5 µm, for example. When the volume-average particle diameter of the binder is within this range, heat shrinkage resistance and process adhesiveness of an obtained functional layer can be further increased, and output characteristics of an obtained secondary battery can be further enhanced.

### <<Heat-resistant fine particles>>

The heat-resistant fine particles that are contained in the functional layer are not specifically limited and may be fine particles formed of an inorganic material (i.e., inorganic fine particles) or fine particles formed of an organic material (i.e., organic fine particles) that are electrochemically stable and are stably present in the environment of use of an electrochemical device.

Note that inorganic fine particles may be used by themselves or organic fine particles may be used by themselves as the heat-resistant fine particles, but it is preferable that inorganic fine particles and organic fine particles are used in combination as the heat-resistant fine particles.

### [Inorganic fine particles]

Examples of inorganic fine particles include particles of inorganic oxides such as aluminum oxide (alumina, Al₂O₃), hydrous aluminum oxide (boehmite, AlOOH), gibbsite (Al(OH)₃), silicon oxide, magnesium oxide (magnesia), magnesium hydroxide, calcium oxide, titanium oxide (titania), barium titanate (BaTiO₃), ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, or the like as necessary. Note that one type of inorganic fine particles may be used individually, or two or more types of inorganic fine particles may be used in combination.

### [Organic fine particles]

The organic fine particles are fine particles formed of a polymer that does not display adhesiveness and differ from the specific particulate polymer and the binder that were previously described.

Examples of organic fine particles include particles of various cross-linked polymers such as cross-linked polymethyl methacrylate, cross-linked polystyrene, cross-linked polydivinylbenzene, cross-linked styrene-divinylbenzene copolymer, polystyrene, polyimide, polyamide, polyamide imide, melamine resin, phenolic resin, and benzoguanamine-formaldehyde condensate; particles of heat-resistant polymers such as polysulfone, polyacrylonitrile, polyaramid, polyacetal, and thermoplastic polyimide; and modified products and derivatives of any of the preceding examples. One type of organic fine particles may be used individually, or two or more types of organic fine particles may be used in combination. Cross-linked polymethyl methacrylate, cross-linked polystyrene, cross-linked polydivinylbenzene, and cross-linked styrene-divinylbenzene copolymer are preferable as the organic fine particles. In other words, the organic fine particles preferably include a cross-linkable monomer unit. Any of the previously described cross-linkable monomer units can be adopted as the cross-linkable monomer unit without any specific limitations. In particular, an ethylene glycol dimethacrylate unit is preferable as a cross-linkable monomer unit included in the organic fine particles. The proportional content of cross-linkable monomer units in the organic fine particles when all repeating units included in the organic fine particles are taken to be 100 mass% is preferably 20 mass% or more, more preferably 30 mass% or more, and even more preferably 40 mass% or more, may be 100%, and may be 95 mass% or less. When the proportional content of cross-linkable monomer units included in the organic fine particles is not less than any of the lower limits set forth above, blocking resistance of an obtained functional layer can be increased.

Note that the organic fine particles are formed of a polymer that does not display adhesiveness as previously described. Specifically, in a case in which the polymer forming the organic fine particles has a glass-transition temperature, the glass-transition temperature is preferably 150°C or higher, and more preferably higher than 200°C. In addition to or separately to the above, it is preferable that the polymer forming the organic fine particles does not have a glass-transition temperature or a melting point in a temperature range of 200°C or lower. Judgment as to whether a composition for a functional layer contains organic fine particles as heat-resistant fine particles in addition to the particulate polymer that is an essential component in the present disclosure may be performed by heating the composition for a functional layer to a higher temperature than the glass-transition temperatures of the polymer A and the polymer B forming the particulate polymer for a specific time (for example, 30 minutes at 100°C), and subsequently verifying whether or not a peak is detected when particle diameter measurement is subsequently performed according to a measurement method for volume-average particle diameter described in the EXAMPLES section of the present specification.

When the content of the organic fine particles is not less than any of the lower limits set forth above, blocking resistance of an obtained functional layer can be further increased. Moreover, when the content of the organic fine particles is not more than any of the upper limits set forth above, process adhesiveness of an obtained functional layer can be further increased.

Of the heat-resistant fine particles described above, the inclusion of inorganic fine particles is preferable from a viewpoint of further improving heat resistance of a functional layer, and the inclusion of at least one of particles formed of alumina (alumina particles), particles formed of boehmite (boehmite particles), particles formed of barium sulfate (barium sulfate particles), and particles formed of magnesium hydroxide (magnesium hydroxide particles) is more preferable.

### [Properties of heat-resistant fine particles]

The volume-average particle diameter of inorganic fine particles serving as the heat-resistant fine particles is preferably 0.1 µm or more, more preferably 0.2 µm or more, and even more preferably 0.25 µm or more, and is preferably 1.5 µm or less, more preferably 1.0 µm or less, and even more preferably 0.8 µm or less. When the volume-average particle diameter of inorganic fine particles serving as the heat-resistant fine particles is 0.1 µm or more, it is possible to inhibit reduction of ion conductivity of a functional layer caused by excessively dense packing of the inorganic fine particles as heat-resistant fine particles in the functional layer and to cause an electrochemical device to display excellent rate characteristics. On the other hand, when the volume-average particle diameter of inorganic fine particles serving as the heat-resistant fine particles is 1.5 µm or less, it is possible to cause a device member that is formed of a laminate including a functional layer to sufficiently display excellent heat resistance even in a situation in which the thickness of the functional layer is reduced. Consequently, heat resistance of the device member can be sufficiently ensured while also increasing the capacity of an electrochemical device.

The volume-average particle diameter of organic fine particles serving as the heat-resistant fine particles is preferably 3.0 µm or more, more preferably 4.0 µm or more, and even more preferably 5.0 µm or more, and is preferably 12.0 µm or less, and more preferably 10.0 µm or less. When the volume-average particle diameter of organic particles serving as the heat-resistant fine particles is not less than any of the lower limits set forth above, blocking resistance of an obtained functional layer can be further increased. Moreover, when the volume-average particle diameter of organic particles serving as the heat-resistant fine particles is not more than any of the upper limits set forth above, process adhesiveness of an obtained functional layer can be increased.

### <Ratio of volume-average particle diameters of heat-resistant fine particles and particulate polymer>

The volume-average particle diameter of inorganic fine particles serving as the heat-resistant fine particles is preferably 2% or more, more preferably 2.5% or more, and even more preferably 3% or more of the volume-average particle diameter of the previously described particulate polymer, and is preferably 25% or less, more preferably 20% or less, and even more preferably 15% or less of the volume-average particle diameter of the previously described particulate polymer. When a ratio of the volume-average particle diameters of inorganic fine particles serving as the heat-resistant fine particles and the particulate polymer is not less than any of the lower limits set forth above, it is possible to suppress an increase of internal resistance and enhance rate characteristics of an obtained electrochemical device. Moreover, when the ratio of the volume-average particle diameters of inorganic fine particles serving as the heat-resistant fine particles and the particulate polymer is not more than any of the upper limits set forth above, heat shrinkage resistance of a functional layer can be further increased.

The volume-average particle diameter of organic fine particles serving as the heat-resistant fine particles is preferably 50% or more, and more preferably 70% or more of the volume-average particle diameter of the previously described particulate polymer, and is preferably 150% or less, and more preferably 130% or less of the volume-average particle diameter of the previously described particulate polymer. When a ratio of the volume-average particle diameters of organic fine particles serving as the heat-resistant fine particles and the particulate polymer is not less than any of the lower limits set forth above, blocking resistance of an obtained functional layer can be further increased by inhibiting deformation of the particulate polymer protruding at the surface of a functional layer. Moreover, when the ratio of the volume-average particle diameters of organic fine particles serving as the heat-resistant fine particles and the particulate polymer is not more than any of the upper limits set forth above, blocking resistance of an obtained functional layer can be sufficiently ensured while also increasing process adhesiveness of the functional layer.

### <Content of inorganic fine particles serving as heat-resistant fine particles>

The content of inorganic fine particles serving as the heat-resistant fine particles when the total contained mass of the particulate polymer and the inorganic fine particles as heat-resistant fine particles is taken to be 100 parts by mass is preferably 70 parts by mass or more, and more preferably 80 parts by mass or more, and is preferably 98 parts by mass or less, and more preferably 95 parts by mass or less. When the content of inorganic fine particles serving as the heat-resistant fine particles is not less than any of the lower limits set forth above, heat shrinkage resistance, deformation resistance, and blocking resistance of an obtained functional layer can be increased. Moreover, when the content of inorganic fine particles serving as the heat-resistant fine particles is not more than any of the upper limits set forth above, process adhesiveness and deformation resistance of an obtained functional layer can be increased.

### <Content of organic fine particles in case in which inorganic fine particles and organic fine particles are used together as heat-resistant fine particles>

In a case in which organic fine particles are also used in addition to inorganic fine particles as the heat-resistant fine particles, the content of the organic fine particles is preferably 20 parts by mass or more, more preferably 50 parts by mass or more, and more preferably 90 parts by mass or more per 100 parts by mass of the particulate polymer, and is preferably 1,000 parts by mass or less, more preferably 800 parts by mass or less, even more preferably 500 parts by mass or less, and further preferably 400 parts by mass or less per 100 parts by mass of the particulate polymer. When the mixing ratio of the organic fine particles and the particulate polymer is not less than any of the lower limits set forth above, blocking resistance of an obtained functional layer can be sufficiently ensured while also increasing process adhesiveness of the functional layer. Moreover, when the mixing ratio of the organic fine particles and the particulate polymer is not more than any of the upper limits set forth above, process adhesiveness of an obtained functional layer can be further increased. This makes it possible to further enhance electrochemical characteristics such as cycle characteristics and rate characteristics of an obtained electrochemical device.

In a case in which inorganic fine particles and organic fine particles are used together as the heat-resistant fine particles, the inorganic fine particles can contribute, in particular, to increasing heat resistance of an obtained functional layer, whereas the organic fine particles can contribute, in particular, to increasing blocking resistance of an obtained functional layer.

### <Other components>

The composition for a functional layer may contain any other components besides the components described above. These other components are not specifically limited so long as they do not affect electrochemical reactions in an electrochemical device, and examples thereof include known additives such as dispersants, viscosity modifiers (thickeners), and wetting agents. One of these other components may be used individually, or two or more of these other components may be used in combination.

For example, a water-soluble polymer may be used as a viscosity modifier (thickener). Note that when a polymer is said to be "water-soluble", this means that when 0.5 g of the polymer is dissolved in 100 g of water at a temperature of 25°C, insoluble content is less than 1.0 mass%.

Various types of thickening polysaccharides can be used as the water-soluble polymer without any specific limitations. The thickening polysaccharide is preferably carboxymethyl cellulose, methyl cellulose, hydroxypropyl cellulose, hydroxypropyl methyl cellulose, hydroxyethyl methyl cellulose, or a salt of any thereof. Moreover, various types of synthetic polymers can be used as the water-soluble polymer. The synthetic polymer is preferably polyvinyl alcohol, poly(meth)acrylic acid, a derivative of poly(meth)acrylic acid, poly(meth)acrylamide, a derivative of poly(meth)acrylamide, a copolymer of any thereof, or a salt of any thereof, and is particularly preferably poly(meth)acrylic acid, a derivative of poly(meth)acrylic acid, poly(meth)acrylamide, a derivative of poly(meth)acrylamide, or a salt thereof. The salt of the water-soluble polymer may be a lithium salt, a sodium salt, an ammonium salt, or the like, for example.

One water-soluble polymer may be used individually, or two or more water-soluble polymers may be used in combination in a freely selected ratio.

### <Production method of composition for electrochemical device functional layer>

No specific limitations are placed on the method by which the composition for a functional layer is produced. For example, the composition for a functional layer can be produced by mixing the above-described particulate polymer, binder, heat-resistant fine particles, water as a dispersion medium, and other components that are used as necessary. Note that in a case in which the particulate polymer or binder is produced through polymerization of a monomer composition in an aqueous solvent, the particulate polymer or binder may be mixed with other components while still in the form of a water dispersion. Moreover, in a case in which the particulate polymer or binder is mixed in the form of a water dispersion, water in that water dispersion may be used as the dispersion medium.

Although no specific limitations are placed on the mixing method of the above-described components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

The specific particulate polymer described above is preferably premixed with a dispersant such as a nonionic surfactant, an anionic surfactant, a cationic surfactant, or an amphoteric surfactant prior to being mixed with the heat-resistant fine particles and the binder. Of these examples, anionic surfactants can suitably be used as the dispersant. Specific examples of anionic surfactants include sulfuric acid ester salts of higher alcohols such as sodium lauryl sulfate, ammonium lauryl sulfate, sodium dodecyl sulfate, ammonium dodecyl sulfate, sodium octyl sulfate, sodium decyl sulfate, sodium tetradecyl sulfate, sodium hexadecyl sulfate, and sodium octadecyl sulfate; alkylbenzene sulfonic acid salts such as sodium dodecylbenzenesulfonate, sodium laurylbenzenesulfonate, and sodium hexadecylbenzenesulfonate; and aliphatic sulfonic acid salts such as sodium laurylsulfonate, sodium dodecylsulfonate, and sodium tetradecylsulfonate. The amount of the dispersant relative to 100 parts by mass of the particulate polymer is preferably 0.01 parts by mass or more, more preferably 0.05 parts by mass or more, and even more preferably 0.1 parts by mass or more, and is preferably 0.5 parts by mass or less, more preferably 0.4 parts by mass or less, and even more preferably 0.3 parts by mass or less. When the amount of the dispersant is not less than any of the lower limits set forth above, uneven distribution of the particulate polymer in a functional layer can be inhibited, and cycle characteristics of an obtained electrochemical device can be enhanced. When the amount of the dispersant is not more than any of the upper limits set forth above, it is possible to suppress an increase of internal resistance and inhibit deterioration of rate characteristics of an obtained electrochemical device.

### (Functional layer for electrochemical device)

The functional layer for an electrochemical device can be formed on a suitable substrate, for example, using the composition for a functional layer set forth above. The functional layer contains at least the above-described particulate polymer, binder, and heat-resistant fine particles and also other components that are used as necessary. Note that components contained in the functional layer are components that were contained in the composition for a functional layer set forth above, and the preferred ratio of these components is the same as the preferred ratio of the components in the composition for a functional layer. The presently disclosed functional layer has excellent process adhesiveness and blocking resistance as a result of being formed using the composition for a functional layer set forth above. The functional layer can be formed according to a method described in the "Laminate for electrochemical device" section without any specific limitations.

The functional layer that is formed using the composition for a functional layer normally has a plurality of heat-resistant fine particles stacked in a thickness direction of the functional layer. A layer (hereinafter, also referred to as a "heat-resistant fine particle layer") is formed as a result of this stacking of a plurality of heat-resistant fine particles in the thickness direction of the functional layer. The functional layer has a structure in which the previously described particulate polymer is partially embedded in this heat-resistant fine particle layer.

The thickness of the layer formed through stacking of heat-resistant fine particles in the thickness direction of the functional layer is preferably 0.5 µm or more, more preferably 0.8 µm or more, and even more preferably 1 µm or more, and is preferably 6 µm or less, more preferably 5 µm or less, and even more preferably 4 µm or less. When the thickness of the heat-resistant fine particle layer is not less than any of the lower limits set forth above, the functional layer has extremely good heat resistance. On the other hand, when the thickness of the heat-resistant fine particle layer is not more than any of the upper limits set forth above, ion diffusivity of the functional layer can be ensured, and rate characteristics of an electrochemical device can be further enhanced.

### [Ratio of volume-average particle diameter of particulate polymer relative to thickness of heat-resistant fine particle layer]

A ratio of the volume-average particle diameter of the particulate polymer relative to the thickness of the heat-resistant fine particle layer (volume-average particle diameter of particulate polymer/thickness of heat-resistant fine particle layer) is preferably 1.0 or more, more preferably 1.5 or more, and even more preferably 2.5 or more, and is preferably 5.0 or less, and more preferably 3.5 or less. When the ratio of the volume-average particle diameter of the particulate polymer relative to the thickness of the heat-resistant fine particle layer is not less than any of the lower limits set forth above, it is easier for the particulate polymer to protrude relative to the surfaces of the heat-resistant fine particles at a thickness direction surface of the functional layer, and thus good adhesiveness can be displayed. Moreover, when the ratio of the volume-average particle diameter of the particulate polymer relative to the thickness of the heat-resistant fine particle layer is not more than any of the upper limits set forth above, the number of adhesion points of the particulate polymer increases, and thus good adhesiveness can be displayed.

### (Laminate for electrochemical device)

The laminate for an electrochemical device includes a substrate and a functional layer for an electrochemical device formed on the substrate using the composition for a functional layer set forth above. The functional layer for an electrochemical device contains at least the above-described particulate polymer, binder, and heat-resistant fine particles and also other components that are used as necessary. Note that components contained in the functional layer are components that were contained in the composition for a functional layer set forth above, and the preferred ratio of these components is the same as the preferred ratio of the components in the composition for a functional layer. As a result of the laminate for an electrochemical device including a functional layer that is formed using the composition for a functional layer set forth above, the laminate for an electrochemical device has excellent process adhesiveness and blocking resistance.

### <Substrate>

The substrate may be selected as appropriate depending on the type of electrochemical device member for which the presently disclosed laminate is used. For example, in a case in which the presently disclosed laminate is used as a separator, a separator substrate is used as the substrate. Moreover, in a case in which the presently disclosed laminate is used as an electrode, for example, an electrode substrate is used as the substrate.

### <<Separator substrate>>

The separator substrate is not specifically limited and may be a known separator substrate such as an organic separator substrate. The organic separator substrate is a porous member that is formed of an organic material. The organic separator substrate may, for example, be a microporous membrane or non-woven fabric containing a polyolefinic resin such as polyethylene, polypropylene, polybutene, or polyvinyl chloride, an aromatic polyamide resin, or the like.

Of these separator substrates, a microporous membrane formed of a polyolefinic resin is preferable from a viewpoint that this makes it possible to increase the ratio of electrode active material in an electrochemical device and to increase the volumetric capacity of the electrochemical device.

Although the separator substrate may be of any thickness, the thickness thereof is preferably not less than 5 µm and not more than 30 µm, more preferably not less than 5 µm and not more than 20 µm, and even more preferably not less than 5 µm and not more than 18 µm.

### «Electrode substrate»

The electrode substrate (positive electrode substrate or negative electrode substrate) is not specifically limited and may, for example, be an electrode substrate obtained by forming an electrode mixed material layer on a current collector.

The current collector, an electrode active material (positive electrode active material or negative electrode active material) and a binder for an electrode mixed material layer (binder for positive electrode mixed material layer or binder for negative electrode mixed material layer) in the electrode mixed material layer, and the method by which the electrode mixed material layer is formed on the current collector may be known examples thereof such as those described in JP2013-145763A, for example.

### <Production method of laminate>

No specific limitations are placed on the method by which the presently disclosed laminate is produced. For example, a method in which a functional layer is formed on a releasable sheet and then this functional layer is transferred onto the substrate may be adopted. However, from a viewpoint of eliminating the need for a transfer operation and increasing production efficiency, the laminate is preferably produced through a step of supplying the composition for a functional layer onto the substrate (supply step) and a step of drying the composition for a functional layer that has been supplied onto the substrate (drying step).

### «Supply step»

In the supply step, the presently disclosed composition for a functional layer set forth above is supplied onto the substrate so as to form a coating film of the composition for a functional layer on the substrate. The method by which the composition for a functional layer is supplied onto the substrate is not specifically limited and may be by applying the composition for a functional layer onto the surface of the substrate or by immersing the substrate in the composition for a functional layer. Application of the composition for a functional layer onto the surface of the substrate is preferable because this facilitates control of thickness of the produced functional layer.

Examples of methods by which the composition for a functional layer may be applied onto the substrate include, but are not specifically limited to, doctor blading, reverse roll coating, direct roll coating, gravure coating, bar coating, extrusion coating, and brush coating.

Note that in the supply step, a coating film of the composition for a functional layer may be formed at just one side of the substrate or coating films of the composition for a functional layer may be formed at both sides of the substrate.

### <<Drying step>>

In the drying step, the coating film of the composition for a functional layer that has been formed on the substrate in the supply step is dried so as to remove the dispersion medium and form a functional layer.

The coating film of the composition for a functional layer may be dried by any commonly known method without any specific limitations. Examples of drying methods that may be used include drying by warm, hot, or low-humidity air; drying in a vacuum; and drying by irradiation with infrared light, an electron beam, or the like. Although no specific limitations are placed on the drying conditions, the drying temperature is preferably 50°C to 150°C, and the drying time is preferably 1 minute to 30 minutes.

Note that in production of the presently disclosed laminate, the supply step and the drying step may be performed with respect to one side of the substrate so as to form a functional layer, and then the supply step and the drying step may be further performed with respect to the other side of the substrate so as to form a functional layer.

### (Electrochemical device)

The presently disclosed electrochemical device includes electrodes and a separator, and a feature thereof is that it includes the presently disclosed laminate set forth above as at least one of an electrode and a separator. The presently disclosed electrochemical device has excellent electrochemical characteristics as a result of the presently disclosed laminate set forth above being used as at least one device member among an electrode and a separator.

The presently disclosed electrochemical device may be, but is not specifically limited to, a lithium ion secondary battery, an electric double-layer capacitor, or a lithium ion capacitor, for example, and is preferably a lithium ion secondary battery.

Although the following description gives a lithium ion secondary battery as one example of the presently disclosed electrochemical device and describes a case in which the presently disclosed laminate set forth above is used as a separator of the lithium ion secondary battery, the presently disclosed electrochemical device is not limited to the following example.

### <Positive electrode and negative electrode>

An electrode that is formed of a known electrode substrate (positive electrode substrate or negative electrode substrate) such as previously described in the "Substrate" section can be used as a positive electrode or negative electrode.

### <Electrolyte solution>

An organic electrolyte solution obtained by dissolving a supporting electrolyte in an organic solvent is normally used as an electrolyte solution. The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. In particular, LiPF₆, LiClO₄, and CF₃SO₃Li are preferable because they readily dissolve in solvents and exhibit a high degree of dissociation. Note that one electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide.

Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

### <Production method of electrochemical device>

No specific limitations are placed on the method by which the presently disclosed electrochemical device is produced. For example, the lithium ion secondary battery described above as one example of the presently disclosed electrochemical device can be produced by stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one device member among the positive electrode, the negative electrode, and the separator is the presently disclosed laminate. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

In the examples and comparative examples, measurements and evaluations of various attributes were performed as follows.

### <Glass-transition temperature>

A particulate polymer (polymer A and polymer B) and a binder produced in each example or comparative example were each used as a measurement sample. The measurement sample was weighed into an aluminum pan in an amount of 10 mg and was then measured by a differential scanning calorimeter (EXSTAR DSC6220 produced by SII NanoTechnology Inc.) under conditions prescribed in JIS Z 8703 with a measurement temperature range of -100°C to 200°C and a heating rate of 10°C/min, and with an empty aluminum pan as a reference, so as to obtain a differential scanning calorimetry (DSC) curve. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

Note that measurement samples of a polymer A and a polymer B forming a particulate polymer were produced as follows. A water dispersion containing each polymer serving as a measurement sample was produced under the same polymerization conditions as for the polymer A or the polymer B using the monomers, various additives, and so forth used in formation of the polymer A or the polymer B. The produced water dispersion was then dried to obtain a measurement sample.

### <Volume-average particle diameter of particulate polymer and fine particles B serving as heat-resistant fine particles>

A particulate polymer and organic fine particles serving as heat-resistant fine particles produced in each example or comparative example were each used as a measurement sample. The measurement sample was weighed out in an amount equivalent to 0.1 g, was taken into a beaker, and 0.1 mL of alkylbenzene sulfonic acid aqueous solution (DRIWEL produced by FUJIFILM Corporation) was added thereto as a dispersant. In addition, 10 mL to 30 mL of a diluent (ISOTON II produced by Beckman Coulter, Inc.) was added into the beaker, and 3 minutes of dispersing was performed using a 20 W (Watt) ultrasonic disperser. Thereafter, the volume-average particle diameter of the measurement sample was measured using a particle size analyzer (Multisizer produced by Beckman Coulter, Inc.) under conditions of an aperture diameter of 20 µm, a medium of ISOTON II, and a measured particle count of 100,000. Note that in a particle diameter distribution (by volume) measured by the particle size analyzer, the particle diameter D50 at which cumulative volume calculated from a small diameter end of the distribution reached 50% was taken to be the volume-average particle diameter.

### <Acid value of polymer A>

The acid value of a polymer A was measured in accordance with JIS K 0070, which is standard methods for analysis of fats and oils established by the Japanese Industrial Standards Committee (JISC).

### <Weight-average molecular weight of polymer A>

After weighing out 0.1 g of a polymer A as a measurement sample prepared in the same manner as for measurement of glass-transition temperature and loading the measurement sample into a 100 mL glass sample bottle, 49.9 g of tetrahydrofuran (THF) was added. Next, a stirring bar was loaded into the sample bottle, 1 hour of stirring was performed at room temperature using a magnetic stirrer, and then filtration was performed using a 0.2 µm PTFE filter to obtain a THF solution of the polymer A. Finally, 100 µL of the THF solution was injected into a GPC measurement apparatus and was measured by GPC. The weight-average molecular weight (Mw) was calculated from a calibration curve for commercially available monodisperse standard polystyrene based on an elution curve obtained by GPC.

### (GPC measurement conditions)

GPC: HLC-8220 (produced by Tosoh Corporation)
Column: TSK-GEL MULTIPORE HXL-M × 2 directly connected columns (produced by Tosoh Corporation)
Eluent: THF
Flow rate: 1.0 mL/min
Temperature: 40°C

### <Volume-average particle diameter of binder>

The volume-average particle diameter of a binder produced in each example was measured by laser diffraction. Specifically, a water dispersion (adjusted to solid content concentration of 0.1 mass%) containing the produced binder was used as a sample. Moreover, in a particle diameter distribution (by volume) measured using a laser diffraction particle size analyzer (LS-230 produced by Beckman Coulter, Inc.), the particle diameter D50 at which cumulative volume calculated from a small diameter end of the distribution reached 50% was taken to be the volume-average particle diameter.

### <Thickness of heat-resistant fine particle layer>

A cross-section of a functional layer-equipped separator was observed using a field emission scanning electron microscope (FE-SEM), and the thickness of a heat-resistant fine particle layer was calculated from an obtained image. Note that the thickness of the heat-resistant fine particle layer was taken to be the distance in a perpendicular direction from the surface of the separator at a side at which the functional layer was formed to a heat-resistant fine particle forming the surface of the functional layer. Also note that in a case in which organic fine particles were included in addition to inorganic fine particles such as in Examples 14 to 27 and Comparative Example 7, the distance in a perpendicular direction to an inorganic fine particle forming the surface of the functional layer was calculated as the thickness of the heat-resistant fine particle layer.

### <Ratio of volume-average particle diameter of heat-resistant fine particles relative to volume-average particle diameter of particulate polymer>

A value for the volume-average particle diameter of heat-resistant fine particles used in each example or comparative example was divided by a value for the volume-average particle diameter of a particulate polymer measured as described above to calculate a ratio (%).

A value for the volume-average particle diameter of alumina used as heat-resistant fine particles in each example or comparative example was taken to be the volume-average particle diameter D50 determined based on a particle diameter distribution measured according to a laser diffraction/scattering method using a particle size analyzer (MT3300 produced by MICROTRAC).

### <Slurry stability: sedimentation properties>

A composition for a functional layer (slurry composition) produced in each example or comparative example was loaded into a test tube of 1 cm in diameter up to a height of 5 cm. Five of such test tubes were used as test samples. Each test sample was set up perpendicularly on a desk. The state of the test sample was observed for 3 days and was judged by the following standard. When two-phase separation is not observed, this indicates better sedimentation properties.
A: Two-phase separation not observed even after 3 days
B: Two-phase separation observed after 1 to 3 days
C: Two-phase separation observed after 3 hours to 1 day
D: Two-phase separation observed within 3 hours

### <Process adhesiveness>

A positive electrode and a functional layer-equipped separator produced in each example or comparative example were each cut out as 10 mm in width and 50 mm in length. The positive electrode and the functional layer-equipped separator were then stacked and were pressed by roll pressing under conditions of a temperature of 60°C, a load of 10 kN/m, and a pressing rate of 30 m/min to obtain a joined product in which the positive electrode and the functional layer-equipped separator were joined together.

The obtained joined product was placed with the surface at the current collector-side of the positive electrode facing downward, and cellophane tape was affixed to the surface of the positive electrode. Tape prescribed by JIS Z1522 was used as the cellophane tape. Moreover, the cellophane tape was fixed to a horizontal test stage in advance. One end of the functional layer-equipped separator was subsequently pulled vertically upward at a pulling speed of 50 mm/min to peel off the functional layer-equipped separator, and the stress during this peeling was measured.

The stress was also measured for a negative electrode produced in each example or comparative example by performing the same operations as when the positive electrode was used.

The stress measurement described above was performed a total of 6 times for three joined products of a positive electrode and a functional layer-equipped separator and three joined products of a negative electrode and a functional layer-equipped separator, an average value of the stresses was determined, and the obtained average value was taken to be the peel strength (N/m).

The calculated peel strength was used to evaluate process adhesiveness of an electrode and a functional layer-equipped separator by the following standard. A larger peel strength indicates higher process adhesiveness (i.e., adhesiveness of battery members during a production process of a battery).
A: Peel strength of 3 N/m or more
B: Peel strength of not less than 2 N/m and less than 3 N/m
C: Peel strength of not less than 1 N/m and less than 2 N/m
D: Peel strength of less than 1 N/m

### <Blocking resistance of functional layer>

A functional layer-equipped separator produced in each example or comparative example was cut out as two pieces with a size of 4 cm in width by 4 cm in length to obtain test specimens. The two obtained test specimens were stacked such that the functional layer-sides thereof faced each other and were then pressed for 2 minutes using a flat plate press at a temperature of 40°C and a load of 8 kN to obtain a pressed product. One end of the obtained pressed product was fixed in place and the other end of the pressed product was pulled vertically upward at a pulling speed of 50 mm/min to cause peeling. The stress during this peeling was measured, and the determined stress was taken to be the blocking strength. The blocking strength was evaluated by the following standard. A smaller blocking strength indicates better inhibition of blocking by a functional layer, and thus indicates that the functional layer has higher blocking resistance.
A: Less than 4 N/m
B: Not less than 4 N/m and less than 6 N/m
C: 6 N/m or more

### <Heat shrinkage resistance of functional layer>

A functional layer-equipped separator produced in each example or comparative example was cut out as a square of 12 cm in width by 12 cm in length, and a square having a side length of 10 cm was drawn in an inner part of the obtained square to obtain a test specimen. The test specimen was left in a 150°C constant temperature tank for 1 hour, and then the area change of the square drawn in the inner part was calculated (area change = {(area of square before being left - area of square after being left)/area of square before being left} × 100%) as a heat shrinkage rate and was evaluated by the following standard. A smaller heat shrinkage rate indicates that a functional layer-equipped separator has better heat shrinkage resistance.
A: Heat shrinkage rate of less than 3%
B: Heat shrinkage rate of not less than 3% and less than 5%
C: Heat shrinkage rate of not less than 5% and less than 10%
D: Heat shrinkage rate of 10% or more

### <Cycle characteristics of secondary battery>

A lithium ion secondary battery produced in each example or comparative example was left at rest at a temperature of 25°C for 5 hours. Next, the lithium ion secondary battery was charged to a cell voltage of 3.65 V by a 0.2C constant-current method at a temperature of 25°C and was subsequently subjected to 12 hours of aging at a temperature of 60°C. The lithium ion secondary battery was then discharged to a cell voltage of 3.00 V by a 0.2C constant-current method at a temperature of 25°C. Thereafter, the lithium ion secondary battery was subjected to CC-CV charging by a 0.2C constant-current method (upper limit cell voltage: 4.20 V) and CC discharging to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. In this cycling, the discharge capacity of the 1^{st} cycle was defined as X1, and the discharge capacity of the 100^{th} cycle was defined as X2.

The discharge capacity X1 and the discharge capacity X2 were used to determine a capacity maintenance rate ΔC' (= (X2/X1) × 100(%)) that was then evaluated by the following standard. A larger value for the capacity maintenance rate ΔC' indicates that a secondary battery has better cycle characteristics.
A: Capacity maintenance rate ΔC' of 93% or more
B: Capacity maintenance rate ΔC' of not less than 90% and less than 93%
C: Capacity maintenance rate ΔC' of less than 90%

### <Output characteristics (rate characteristics) of secondary battery>

A lithium ion secondary battery produced in each example or comparative example was constant-current constant-voltage (CCCV) charged to 4.3 V in an atmosphere having a temperature of 25°C for cell preparation. The prepared cell was discharged to 3.0 V by 0.2C and 1.5C constant-current methods, and the electric capacity was determined for each thereof. A discharge capacity maintenance rate expressed by the ratio of the electric capacities (= (electric capacity at 1.5C/electric capacity at 0.2C) × 100(%)) was determined. This measurement was performed with respect to 5 lithium ion secondary battery cells. An average value of the discharge capacity maintenance rates of these cells was determined and was evaluated by the following standard. A larger average value for the discharge capacity maintenance rate indicates that a secondary battery has better output characteristics.
A: Average value for discharge capacity maintenance rate of 90% or more
B: Average value for discharge capacity maintenance rate of not less than 85% and less than 90%
C: Average value for discharge capacity maintenance rate of less than 85%

### (Example 1)

### <Production of particulate polymer>

### [Production of polymer (A)]

A reactor was charged with 200 parts of toluene, and this toluene was stirred while thoroughly purging the inside of the reactor with nitrogen. Thereafter, the temperature was raised to 90°C, and then a mixed solution of 97 parts of methyl methacrylate and 2.6 parts of n-butyl acrylate as (meth)acrylic acid ester monomer, 0.4 parts of acrylic acid as an acidic group-containing monomer, and 3 parts of t-butyl peroxy-2-ethylhexanoate (produced by NOF Corporation; product name: PERBUTYL O) as a polymerization initiator was added dropwise into the reactor over 2 hours. The reactor was held under toluene reflux for 10 hours to complete polymerization, and then solvent was removed by distillation under reduced pressure. A copolymer that was obtained in this manner was taken to be a polymer (A).

### [Production of monomer composition (B)]

A monomer composition (B) was produced by mixing 75 parts of styrene as an aromatic vinyl monomer, 24.5 parts of 2-ethylhexyl acrylate as a (meth)acrylic acid ester monomer, and 0.5 parts of ethylene glycol dimethacrylate as a cross-linkable monomer.

### [Production of metal hydroxide]

A colloidal dispersion liquid (A) containing magnesium hydroxide as a metal hydroxide was produced by gradually adding an aqueous solution (A2) of 5.6 parts of sodium hydroxide dissolved in 50 parts of deionized water to an aqueous solution (A1) of 8 parts of magnesium chloride dissolved in 200 parts of deionized water under stirring.

### [Suspension polymerization]

A particulate polymer was produced by suspension polymerization. Specifically, the polymer (A) and the monomer composition (B) obtained as described above were added to the colloidal dispersion liquid (A) containing magnesium hydroxide, were further stirred therewith, and then 2.0 parts of t-butyl peroxy-2-ethylhexanoate (PERBUTYL^{®} O (PERBUTYL is a registered trademark in Japan, other countries, or both) produced by NOF Corporation) was added as a polymerization initiator to yield a mixture. The mixing ratio of the polymer (A) and the monomer composition (B) was set such that the ratio of the polymer (A) in the resultant particulate polymer was as indicated in Table 1. The obtained mixture was subjected to 1 minute of high-shear stirring at a rotation speed of 15,000 rpm using an inline emulsifying/dispersing device (CAVITRON produced by Pacific Machinery & Engineering Co., Ltd.) to form mixed droplets of the polymer (A) and the monomer composition (B) in the colloidal dispersion liquid (A) containing magnesium hydroxide.

The magnesium hydroxide-containing colloidal dispersion liquid (A) in which droplets of the monomer composition had been formed was loaded into a reactor, the temperature was raised to 90°C, and a polymerization reaction was performed for 5 hours to yield a water dispersion containing a particulate polymer.

The water dispersion containing the particulate polymer was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated a number of times. Thereafter, separation was performed by filtration to obtain solid content that was then loaded into a vessel of a dryer and was dried at 40°C for 48 hours to obtain a dried particulate polymer.

### <Production of water dispersion containing binder (α)>

A reactor including a stirrer was supplied with 70 parts of deionized water, 0.15 parts of sodium lauryl sulfate (EMAL^{®} 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (α) was produced in a separate vessel by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acid group-containing monomer, 2 parts of acrylonitrile as a nitrile group-containing monomer, and 1 part of allyl methacrylate and 1 part of allyl glycidyl ether as cross-linkable monomers.

The obtained monomer composition (α) was continuously added into the reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder (α) as an acrylic polymer. The obtained particulate binder (α) had a volume-average particle diameter of 0.25 µm and a glass-transition temperature of -40°C.

### <Production of slurry composition>

A pre-mixing slurry was obtained by adding 0.5 parts of polyacrylic acid as a dispersant to 100 parts of alumina (AKP30 produced by Sumitomo Chemical Co., Ltd.; volume-average particle diameter: 0.3 µm) as heat-resistant fine particles (fine particles A; inorganic fine particles), further adding 5 parts in terms of solid content of the water dispersion containing the binder (α) and 1.5 parts of carboxymethyl cellulose as a thickener, adjusting the solid content concentration to 55% through addition of deionized water, and performing mixing using a ball mill.

Next, 0.2 parts of sodium dodecylbenzenesulfonate (NEOPELEX G-15 produced by Kao Corporation) was added as a surfactant relative to 100 parts of the particulate polymer, mixing thereof was performed such that the solid content concentration was 40%, and the resultant mixture was added to the pre-mixing slurry obtained as described above. The solid content concentration was further adjusted to 40% through addition of deionized water to yield a slurry composition (composition for a functional layer) in which the mixing ratio of the heat-resistant fine particles (alumina) and the particulate polymer was a mixing ratio indicated in Table 1. Slurry stability was evaluated for the obtained composition for a functional layer (slurry composition) as previously described. The result is shown in Table 1.

### <Production of functional layer-equipped separator>

A microporous membrane (thickness: 12 µm) made of polyethylene was prepared as a separator substrate. The slurry composition obtained as described above was applied onto one side of the separator substrate by bar coating. Next, the separator substrate with the slurry composition applied thereon was dried at 50°C for 1 minute to form a functional layer. The same operations were performed with respect to the other side of the separator substrate to produce a functional layer-equipped separator including functional layers at both sides of the separator substrate. The thickness of a heat-resistant fine particle layer in each of these functional layers was set as 2.0 µm.

### <Production of positive electrode>

A slurry composition for a positive electrode was produced by mixing 100 parts of LiCoO₂ (volume-average particle diameter: 12 µm) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 µm in thickness serving as a current collector by a comma coater such as to have a thickness after drying of approximately 150 µm. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 µm).

### <Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. The reaction was quenched by cooling at the point at which the polymerization conversion rate reached 96% to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing the desired binder for a negative electrode mixed material layer.

After compounding 80 parts of artificial graphite (volume-average particle diameter: 15.6 µm) as a negative electrode active material (1) and 16 parts of a silicon-based active material SiOₓ (volume-average particle diameter: 4.9 µm) as a negative electrode active material (2) and then mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and a further 15 minutes of mixing was performed at 25°C to yield a mixture. Deionized water and 1.5 parts in terms of solid content of the water dispersion containing the binder for a negative electrode mixed material layer described above were added to this mixture, the final solid content concentration was adjusted to 52%, and 10 minutes of mixing was performed to obtain a mixture. This mixture was subjected to defoaming under reduced pressure to yield a slurry composition for a negative electrode having good fluidity.

The slurry composition for a negative electrode was applied onto copper foil of 20 µm in thickness serving as a current collector by a comma coater such as to have a thickness after drying of approximately 150 µm. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 µm).

The functional layer-equipped separator, positive electrode, and negative electrode obtained as described above were used to evaluate process adhesiveness, blocking resistance of a functional layer, and heat resistance of a functional layer. The results are shown in Table 1.

### <Production of lithium ion secondary battery>

The post-pressing positive electrode produced as described above was cut out as a rectangle of 49 cm × 5 cm and was placed with the surface at the positive electrode mixed material layer-side facing upward. The functional layer-equipped separator was cut out as 120 cm × 5.5 cm and was arranged on this positive electrode mixed material layer such that the positive electrode was positioned at one longitudinal direction side of the functional layer-equipped separator. In addition, the post-pressing negative electrode produced as described above was cut out as a rectangle of 50 cm × 5.2 cm and was arranged on the functional layer-equipped separator such that the surface at the negative electrode mixed material layer-side faced toward the functional layer-equipped separator and the negative electrode was positioned at the other longitudinal direction side of the functional layer-equipped separator. The resultant laminate was wound by a winding machine to obtain a roll. This roll was pressed into a flattened form at 70°C and 1 MPa, was subsequently enclosed in an aluminum packing case serving as a battery case, and electrolyte solution (solvent: ethylene carbonate/diethyl carbonate/vinylene carbonate (volume ratio) = 68.5/30/1.5; electrolyte: LiPF₆ of 1 M in concentration) was injected such that no air remained. An opening of the aluminum packing case was heat sealed at a temperature of 150°C so as to close the aluminum packing case and produce a wound lithium ion secondary battery having a capacity of 800 mAh.

The obtained lithium ion secondary battery was used to evaluate cycle characteristics and output characteristics of a secondary battery. The results are shown in Table 1.

### (Examples 2 and 3)

Operations, measurements, and evaluations were performed in the same way as in Example 1 with the exception that the amount of magnesium hydroxide used as a dispersion stabilizer in production of the particulate polymer was changed such that the volume-average particle diameter of the particulate polymer was as indicated in Table 1. The results are shown in Table 1.

### (Example 4)

Operations, measurements, and evaluations were performed in the same way as in Example 1 with the exception that the types and amounts of monomers used in production of the polymer A were changed such that the chemical composition of the obtained copolymer was as indicated in Table 1. The results are shown in Table 1.

### (Example 5)

Operations, measurements, and evaluations were performed in the same way as in Example 1 with the exception that the types and amounts of monomers and the amount of polymerization initiator used in production of the polymer A were changed such that the chemical composition and weight-average molecular weight of the obtained copolymer were as indicated in Table 1. The results are shown in Table 1.

### (Example 6)

Operations, measurements, and evaluations were performed in the same way as in Example 1 with the exception that the types and amounts of monomers used in production of the polymer A were changed such that the chemical composition and glass-transition temperature of the obtained copolymer were as indicated in Table 1. The results are shown in Table 1.

### (Examples 7 and 8)

Operations, measurements, and evaluations were performed in the same way as in Example 1 with the exception that the mixing ratio of the polymer (A) and the monomer composition (B) in suspension polymerization during production of the particulate polymer was changed such that the ratio of the polymer (A) and the polymer (B) in the obtained particulate polymer was as indicated in Table 1. The results are shown in Table 1.

### (Example 9)

Operations, measurements, and evaluations were performed in the same way as in Example 1 with the exception that alumina having a volume-average particle diameter of 1 µm (AL011PB produced by Kojundo Chemical Laboratory Co., Ltd.) was used as heat-resistant fine particles (fine particles A; inorganic fine particles) in production of the composition for a functional layer. The results are shown in Table 2.

### (Example 10)

Operations, measurements, and evaluations were performed in the same way as in Example 1 with the exception that alumina having a volume-average particle diameter of 0.7 µm (AKP-3000 produced by Sumitomo Chemical Co., Ltd.) was used as heat-resistant fine particles (fine particles A; inorganic fine particles) in production of the composition for a functional layer. The results are shown in Table 2.

### (Example 11)

Operations, measurements, and evaluations were performed in the same way as in Example 1 with the exception that alumina having a volume-average particle diameter of 0.2 µm (AKP-50 produced by Sumitomo Chemical Co., Ltd.) was used as heat-resistant fine particles (fine particles A; inorganic fine particles) in production of the composition for a functional layer. The results are shown in Table 2.

### (Examples 12 and 13)

Operations, measurements, and evaluations were performed in the same way as in Example 1 with the exception that additive amounts in production of the composition for a functional layer were changed such that the mixing ratio of the heat-resistant fine particles (fine particles A; inorganic fine particles) and the particulate polymer was as indicated in Table 2. The results are shown in Table 2.

### (Example 14)

Fine particles B (organic fine particles) produced as described below were compounded during addition of the mixture containing the particulate polymer and the surfactant to the pre-mixing slurry containing the fine particles A (inorganic fine particles) as heat-resistant fine particles in production of the composition for a functional layer. The mixing ratio was set such that the additive ratio of the fine particles B relative to the particulate polymer was as indicated in Table 2. With the exception of the above, operations, measurements, and evaluations were performed in the same way as in Example 1. The results are shown in Table 2.

### <Production of organic fine particles>

### [Production of monomer composition (C)]

A monomer composition (C) was produced by mixing 50 parts of styrene as an aromatic vinyl monomer and 50 parts of ethylene glycol dimethacrylate as a cross-linkable monomer.

### [Production of metal hydroxide]

A colloidal dispersion liquid (A) containing magnesium hydroxide as a metal hydroxide was produced by gradually adding an aqueous solution (A2) of 5.6 parts of sodium hydroxide dissolved in 50 parts of deionized water to an aqueous solution (A1) of 8 parts of magnesium chloride dissolved in 200 parts of deionized water under stirring.

### [Suspension polymerization]

Organic fine particles were produced by suspension polymerization. Specifically, the monomer composition (C) obtained as described above was added to the colloidal dispersion liquid (A) containing magnesium hydroxide, was further stirred therewith, and then 2.0 parts of t-butyl peroxy-2-ethylhexanoate (PERBUTYL^{®} O produced by NOF Corporation) was added as a polymerization initiator to yield a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the monomer composition (C) in the colloidal dispersion liquid (A) containing magnesium hydroxide.

The magnesium hydroxide-containing colloidal dispersion liquid (A) in which droplets of the monomer composition (C) had been formed was loaded into a reactor, the temperature was raised to 90°C, and a polymerization reaction was performed for 5 hours to yield a water dispersion containing organic fine particles.

The water dispersion containing the organic fine particles were stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated a number of times. Thereafter, separation was performed by filtration to obtain solid content that was then loaded into a vessel of a dryer and was dried at 40°C for 48 hours to obtain dried organic fine particles. The volume-average particle diameter of the obtained organic fine particles was evaluated as previously described. The result is shown in Table 2.

### (Example 15)

Fine particles B (organic fine particles) produced as described below were compounded in addition to the fine particles A (inorganic fine particles) as heat-resistant fine particles in production of the composition for a functional layer. The mixing ratio was set such that the additive ratio of the fine particles B relative to the particulate polymer was as indicated in Table 2. With the exception of the above, operations, measurements, and evaluations were performed in the same way as in Example 14. The results are shown in Table 2.

### <Production of organic fine particles>

### [Production of monomer composition (C)]

A monomer composition (C) was produced by mixing 50 parts of methyl methacrylate as a (meth)acrylic acid ester monomer and 50 parts of ethylene glycol dimethacrylate as a cross-linkable monomer.

### [Production of metal hydroxide]

A colloidal dispersion liquid (A) containing magnesium hydroxide was produced in the same way as in Example 14.

### [Suspension polymerization]

Organic fine particles were produced by suspension polymerization in the same way as in Example 14.

### (Example 16)

Fine particles B (organic fine particles) produced as described below were compounded in addition to the fine particles A (inorganic fine particles) as heat-resistant fine particles in production of the composition for a functional layer. The mixing ratio was set such that the additive ratio of the fine particles B relative to the particulate polymer was as indicated in Table 2. With the exception of the above, operations, measurements, and evaluations were performed in the same way as in Example 14. The results are shown in Table 2.

### <Production of organic fine particles>

### [Production of monomer composition (C)]

A monomer composition (C) was produced by mixing 50 parts of styrene as an aromatic vinyl monomer and 50 parts of divinylbenzene as a cross-linkable monomer.

### [Production of metal hydroxide]

A colloidal dispersion liquid (A) containing magnesium hydroxide was produced in the same way as in Example 14.

### [Suspension polymerization]

Organic fine particles were produced by suspension polymerization in the same way as in Example 14.

### (Example 17)

Fine particles B (organic fine particles) produced as described below were compounded in addition to the fine particles A (inorganic fine particles) as heat-resistant fine particles in production of the composition for a functional layer. The mixing ratio was set such that the additive ratio of the fine particles B relative to the particulate polymer was as indicated in Table 2. With the exception of the above, operations, measurements, and evaluations were performed in the same way as in Example 14. The results are shown in Table 2.

### <Production of organic fine particles>

### [Production of monomer composition (C)]

A monomer composition (C) was produced by mixing 25 parts of styrene as an aromatic vinyl monomer and 75 parts of ethylene glycol dimethacrylate as a cross-linkable monomer.

### [Production of metal hydroxide]

A colloidal dispersion liquid (A) containing magnesium hydroxide was produced in the same way as in Example 14.

### [Suspension polymerization]

Organic fine particles were produced by suspension polymerization in the same way as in Example 14.

### (Example 18)

Fine particles B (organic fine particles) produced as described below were compounded in addition to the fine particles A (inorganic fine particles) as heat-resistant fine particles in production of the composition for a functional layer. The mixing ratio was set such that the additive ratio of the fine particles B relative to the particulate polymer was as indicated in Table 2. With the exception of the above, operations, measurements, and evaluations were performed in the same way as in Example 14. The results are shown in Table 2.

### <Production of organic fine particles>

### [Production of monomer composition (C)]

A monomer composition (C) was produced by mixing 5 parts of styrene as an aromatic vinyl monomer and 95 parts of ethylene glycol dimethacrylate as a cross-linkable monomer.

### [Production of metal hydroxide]

A colloidal dispersion liquid (A) containing magnesium hydroxide was produced in the same way as in Example 14.

### [Suspension polymerization]

Organic fine particles were produced by suspension polymerization in the same way as in Example 14.

### (Example 19)

Operations, measurements, and evaluations were performed in the same way as in Example 14 with the exception that a particulate polymer (volume-average particle diameter: 8 µm) produced in the same way as in Example 3 and organic fine particles (fine particles B) as heat-resistant fine particles that were produced as described below were used in production of the composition for a functional layer. The results are shown in Table 3.

### <Production of organic fine particles>

### [Production of monomer composition (C)]

A monomer composition (C) was produced by mixing 50 parts of styrene as an aromatic vinyl monomer and 50 parts of ethylene glycol dimethacrylate as a cross-linkable monomer.

### [Production of metal hydroxide]

A colloidal dispersion liquid (A) containing magnesium hydroxide was produced in the same way as in Example 14.

### [Suspension polymerization]

Organic fine particles were produced by suspension polymerization in the same way as in Example 14 with the exception that the amount of magnesium hydroxide as a dispersion stabilizer in production of the organic fine particles was changed such that the obtained organic fine particles had a volume-average particle diameter of 8 µm.

### (Example 20)

Operations, measurements, and evaluations were performed in the same way as in Example 14 with the exception that fine particles B (organic fine particles) produced as described below were compounded in addition to the fine particles A (inorganic fine particles) as heat-resistant fine particles in production of the composition for a functional layer. The results are shown in Table 3.

### <Production of organic fine particles>

### [Production of monomer composition (C)]

A monomer composition (C) was produced by mixing 50 parts of styrene as an aromatic vinyl monomer and 50 parts of ethylene glycol dimethacrylate as a cross-linkable monomer.

### [Production of metal hydroxide]

A colloidal dispersion liquid (A) containing magnesium hydroxide was produced in the same way as in Example 14.

### [Suspension polymerization]

Organic fine particles were produced by suspension polymerization in the same way as in Example 14 with the exception that the amount of magnesium hydroxide as a dispersion stabilizer in production of the organic fine particles was changed such that the obtained organic fine particles had a volume-average particle diameter of 5 µm.

### (Example 21)

Operations, measurements, and evaluations were performed in the same way as in Example 14 with the exception that fine particles B (organic fine particles) produced in the same way as in Example 19 were compounded in addition to the fine particles A (inorganic fine particles) as heat-resistant fine particles in production of the composition for a functional layer. The results are shown in Table 3.

### (Examples 22 and 23)

Fine particles B (organic fine particles) produced in the same way as in Example 14 were compounded during addition of the mixture containing the particulate polymer and the surfactant to the pre-mixing slurry containing the fine particles A (inorganic fine particles) as heat-resistant fine particles in production of the composition for a functional layer. The mixing ratio was set such that the additive ratio of the fine particles B relative to the particulate polymer was as indicated in Table 3. With the exception of the above, operations, measurements, and evaluations were performed in the same way as in Example 1. The results are shown in Table 3.

### (Examples 24 and 25)

In production of the particulate polymer, the chemical composition of the monomer composition (B) was changed as indicated in Table 3, but the particulate polymer was produced in the same way as in Example 1 with regards to other points. Moreover, fine particles B (organic fine particles) produced in the same way as in Example 14 were compounded during addition of the mixture containing the particulate polymer and the surfactant to the pre-mixing slurry containing the fine particles A (inorganic fine particles) as heat-resistant fine particles in production of the composition for a functional layer. The mixing ratio was set such that the additive ratio of the fine particles B relative to the particulate polymer was as indicated in Table 3. With the exception of the above, operations, measurements, and evaluations were performed in the same way as in Example 1. The results are shown in Table 3.

### (Example 26)

A commercially available SBR binder (BM-451B produced by Zeon Corporation) was used as a binder in production of the slurry composition. With the exception of the above, operations, measurements, and evaluations were performed in the same way as in Example 14. The results are shown in Table 3.

### (Example 27)

A binder (β) produced as described below was used as a binder in production of the slurry composition. With the exception of the above, operations, measurements, and evaluations were performed in the same way as in Example 14. The results are shown in Table 3.

### <Production of water dispersion containing binder (β)>

A reactor including a stirrer was supplied with 70 parts of deionized water, 0.15 parts of polyoxyethylene lauryl ether (EMULGEN^{®} 120 (EMULGEN is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (β) was produced in a separate vessel by mixing 50 parts of deionized water, 0.5 parts of polyoxyethylene lauryl ether (EMULGEN^{®} 120 produced by Kao Corporation) as an emulsifier, 70 parts of 2-ethylhexyl acrylate as a (meth)acrylic acid alkyl ester monomer, 25 parts of styrene as an aromatic vinyl monomer, 1.7 parts of allyl glycidyl ether and 0.3 parts of allyl methacrylate as cross-linkable monomers, and 3 parts of acrylic acid as an acid group-containing monomer.

The obtained monomer composition (β) was continuously added into the reactor including a stirrer over 4 hours to perform polymerization. The reaction was carried out at 70°C during the addition. Once the addition was complete, stirring was carried out for a further 3 hours at 80°C, and then the reaction was ended to yield a water dispersion containing a particulate binder (β). The obtained water dispersion containing the binder (β) was used to measure the volume-average particle diameter and glass-transition temperature of the binder (β). The binder (β) had a volume-average particle diameter of 0.25 µm and a glass-transition temperature of -35°C.

### (Comparative Example 1)

Operations, measurements, and evaluations were performed in the same way as in Example 1 with the exception that heat-resistant fine particles were not compounded in production of the composition for a functional layer. The results are shown in Table 4.

### (Comparative Example 2)

Operations, measurements, and evaluations were performed in the same way as in Example 1 with the exception that a particulate polymer was not produced and a composition for a functional layer that did not contain a particulate polymer was obtained. The results are shown in Table 4.

### (Comparative Example 3)

Operations, measurements, and evaluations were performed in the same way as in Example 1 with the exception that a copolymer produced as described below that did not include a polymer (A) was used as a particulate polymer. The results are shown in Table 4.

### <Production of particulate polymer not including polymer A>

A magnesium hydroxide-containing colloidal dispersion liquid (A) in which droplets of a monomer composition (B) had been formed similar to that in Example 1 was loaded into a reactor and was heated to 90°C to initiate polymerization. Polymerization was continued until the polymerization conversion rate reached 96% to yield a water dispersion containing a particulate polymer. At the point at which the conversion rate reached 96%, cooling was performed to quench the reaction and yield a water dispersion containing a particulate polymer.

The volume-average particle diameter and glass-transition temperature of the obtained particulate polymer were measured. The results are shown in Table 4.

### (Comparative Example 4)

Operations, measurements, and evaluations were performed in the same way as in Example 1 with the exception that a copolymer produced as described below was used as a particulate polymer. The results are shown in Table 4.

### <Production of particulate polymer>

A particulate polymer was produced in the same way as in Example 1 with the exception that a polymer produced as described below that did not include an acidic group-containing monomer unit (i.e., another polymer that was not the polymer (A) and did not include an acidic group-containing monomer unit) was used instead of the polymer (A) produced in Example 1.

### [Production of polymer not including acidic group-containing monomer unit]

A reactor was charged with 200 parts of toluene, and this toluene was stirred while thoroughly purging the inside of the reactor with nitrogen. Thereafter, the temperature was raised to 90°C, and then a mixed solution of 97.3 parts of methyl methacrylate, 2.7 parts of n-butyl acrylate, and 3 parts of t-butyl peroxy-2-ethylhexanoate (produced by NOF Corporation; product name: PERBUTYL O) was added dropwise into the reactor over 2 hours. The reactor was held under toluene reflux for 10 hours to complete polymerization, and then solvent was removed by distillation under reduced pressure. A copolymer obtained in this manner was used instead of the polymer (A).

### (Comparative Example 5)

Operations, measurements, and evaluations were performed in the same way as in Example 1 with the exception that a copolymer produced as described below that had a small volume-average particle diameter was used as a particulate polymer. The results are shown in Table 4.

### <Production of particulate polymer>

First, a 5 MPa pressure-resistant vessel equipped with a stirrer was charged with 24.5 parts of 2-ethylhexyl acrylate as a (meth)acrylic acid ester monomer, 74 parts of styrene as an aromatic vinyl monomer, 1 part of methacrylic acid of an acidic group-containing monomer, 0.5 parts of ethylene glycol dimethacrylate as a cross-linkable monomer, 1 part of sodium dodecylbenzenesulfonate as an emulsifier, 150 parts of deionized water, and 0.5 parts of potassium persulfate as a polymerization initiator. These materials were thoroughly stirred and were then heated to 60°C to initiate polymerization. Polymerization was continued until the polymerization conversion rate reached 96% to yield a water dispersion containing a particulate polymer A. Next, at the point at which the polymerization conversion rate reached 96%, 97 parts of methyl methacrylate, 2.6 parts of n-butyl acrylate, and 0.4 parts of acrylic acid were added, and polymerization was continued under heating to 70°C until the conversion rate reached 96%, at which point, cooling was performed to quench the reaction to yield a water dispersion containing a particulate polymer.

### (Comparative Example 6)

In production of the slurry composition, a particulate polymer produced in the same way as in Comparative Example 5 was used, and organic fine particles (fine particles B) produced in the same way as in Example 14 were compounded instead of inorganic fine particles (fine particles A) as heat-resistant fine particles. With the exception of the above, operations, measurements, and evaluations were performed in the same way as in Example 1. The results are shown in Table 4.

### (Comparative Example 7)

Production of a slurry composition was performed in the same way as in Example 14 with the exception that a particulate polymer was not compounded. With the exception of the above, operations, measurements, and evaluations were performed in the same way as in Example 1. The results are shown in Table 4.

In Tables 1 to 4:
"AA" indicates acrylic acid;
"MMA" indicates methyl methacrylate;
"BA" indicates n-butyl acrylate;
"ST" indicates styrene;
"2EHA" indicates 2-ethylhexyl acrylate;
"EDMA" indicates ethylene glycol dimethacrylate;
"DVB" indicates divinylbenzene;
"AN" indicates acrylonitrile;
"AMA" indicates allyl methacrylate;
"MAA" indicates methacrylic acid; and
"AGE" indicates allyl glycidyl ether.

**[Table 1]**

| | | | | | Example 1 | Example 2 | Example 3 | Example 4 | Example 5 | Example 6 | Example 7 | Example 8 |
|---|---|---|---|---|---|---|---|---|---|---|---|---|
| | Particulate polymer | Polymer A | Chemical composition | (Meth)acrylic acid ester monomer unit (type, mass%) | MMA/BA (97126) | MMA/BA (97/2.6) | MMA/BA (97/2.6) | BA/MAA (5/1) | MMA/BA (90.6/9.0) | MMA/BA (92.8/6.8) | MMA/BA (97/2.6) | MMA/BA (97/2.6) |
| | | | | Acidic group-cotiaining monomer unit (type, mass%) | AA (0.4) | AA (0.4) | AA (0.4) | LiSS (3) | AA (0.4) | AA (0.4) | AA (0.4) | AA (0.4) |
| | | | | Other units (type, mass%) | - | - | - | ST (91) | - | - | - | - |
| | | | Glass-transitiontenperature [°C] | | 75 | 75 | 75 | 80 | 85 | 65.5 | 75 | 75 |
| | | | Acid value [mg KOH/g] | | 2.6 | 2.6 | 2.6 | 6.8 | 2.6 | 2.6 | 2.6 | 2.6 |
| | | | Weight-average molecular weight [-] | | 9500 | 9500 | 9500 | 11600 | 37550 | 11000 | 9500 | 9500 |
| | | Polymer B | Chemical conposition | Aromatic vinyl monomer unit (type, mass%) | ST (75) | ST (75) | ST (75) | ST (75) | ST (75) | ST (75) | ST (75) | ST (75) |
| | | | | Other units (type, mass%) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) |
| | | | Glass-transitiontenperature [°C] | | 52 | 52 | 52 | 52 | 52 | 52 | 52 | 52 |
| | | Volume-average particle diameter [µm] | | | 6 | 3 | 8 | 6 | 6 | 6 | 6 | 6 |
| | | Additive ratio of polymer A relative to particulate polymer [mass%] | | | 2 | 2 | 2 | 2 | 2 | 2 | 0.1 | 10 |
| Composition | Heat-resistart fine particles | Fine particles A (inorganic fine particles) | Volume-average particle diameter ratio [%] Heat-resistant fine particles A/Particulate polymer | | 5 | 10 | 4 | 5 | 5 | 5 | 5 | 5 |
| | | | Volume-average particle diameter [µm] | | 0.3 | 0.3 | 0.3 | 0.3 | 0.3 | 0.3 | 0.3 | 0.3 |
| | | | Type | | Alumina | Alumina | Alumina | Alumina | Alumina | Alumina | Alumina | Alumina |
| | | | Mixing ratio of heat-resistant fine particles A and particulate polymer (mass ratio) | | 90:10 | 90:10 | 90:10 | 90:10 | 90:10 | 90:10 | 90:10 | 90:10 |
| | | Fine particles B (organic fine particles) | Chemical composition | | - | - | - | - | - | - | - | - |
| | | | Volume-average particle diameter [µm] | | - | - | - | - | - | - | - | - |
| | | | Particulate polymer particle diameter/Fine particle B particle diameter [%] | | - | - | - | - | - | - | - | - |
| | | | Additive amount of heat-resistant fine particles B relative to 100 parts of particulate polymer [parts by mass] | | - | - | - | - | - | - | - | - |
| | Binder | Chemical composition | | | BA/AN/AMA/MAA/AGE | | | | | | | |
| | | Content (based on heat-resistant fine particles, parts by mass) | | | 5 | 5 | 5 | 5 | 5 | 5 | 5 | 5 |
| | | Volume-average particle diameter | | | 0.25 | 0.25 | 0.25 | 0.25 | 0.25 | 0.25 | 0.25 | 0.25 |
| Laminate | Functional layer coating site | | | | On separator | | | | | | | |
| | Separator substrate thickness [µm] | | | | 12 | 12 | 12 | 12 | 12 | 12 | 12 | 12 |
| | Heat-resistant fine particle layer thickness [µm] | | | | 2 | 2 | 2 | 2 | 2 | 2 | 2 | 2 |
| | Particulate polymer particle diameter/Heat-resistant fine particle layer thickness [-] | | | | 3 | 1.5 | 4 | 3 | 3 | 3 | 3 | 3 |
| Evaluation | Slurry stability | | | | A | A | A | A | A | A | B | A |
| | Process adhesiveness | | | | A | B | B | B | B | A | A | B |
| | Blocking resistance | | | | A | A | A | A | A | B | B | A |
| | Heat-shrinkage resistance | | | | A | A | A | A | A | A | A | A |
| | Cycle characteristics | | | | A | A | A | A | A | A | A | A |
| | Rate characteristics | | | | A | A | A | A | A | A | A | A |

**[Table 2]**

| | | | | | Example 9 | Example 10 | Example 11 | Example 12 | Example 13 | Example 14 | Example 15 | Example 16 | Example 17 | Example 18 |
|---|---|---|---|---|---|---|---|---|---|---|---|---|---|---|
| | Particulate polymer | Polymer | Chemical composition | (Meth)acrylic acid ester monomer unit (type, mass%) | MMA/BA (97/2.6) | MMA/BA (97/2.6) | MMA/BA (97/2.6) | MMA/BA (97/2.6) | MMA/BA (97/2.6) | MMA/BA (97/2.6) | MMA/BA (97/2.6) | MMA/BA (97/2.6) | MMA/BA (97/2.6) | MMA/BA (97/2.6) |
| | | | | Acidic group-containing monomer unit (type, mass%) | AA (0.4) | AA (0.4) | AA (0.4) | AA (0.4) | AA (0.4) | AA (0.4) | AA (0.4) | AA (0.4) | AA (0.4) | AA (0.4) |
| | | | | A Other units (type, mass%) | - | - | - | - | - | - | - | - | | - |
| | | | Glass-transition temperature [°C] | | 75 | 75 | 75 | 75 | 75 | 75 | 75 | 75 | 75 | 75 |
| | | | Acid value [mg KOH/g] | | 2.6 | 2.6 | 2.6 | 2.6 | 2.6 | 2.6 | 2.6 | 2.6 | 2.6 | 2.6 |
| | | | Weight-average molecular weight [-] | | 9500 | 9500 | 9500 | 9500 | 9500 | 9500 | 9500 | 9500 | 9500 | 9500 |
| | | Polymer B | Chemical composition | Aromatic vinyl monomer unit (type, mass%) | ST (75) | ST (75) | ST (75) | ST (75) | ST (75) | ST (75) | ST (75) | ST (75) | ST (75) | ST (75) |
| | | | | Other units (type, mass%) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) |
| | | | Glass-transition temperature [°C] | | 52 | 52 | 52 | 52 | 52 | 52 | 52 | 52 | 52 | 52 |
| | | Volume-average particle diameter [µm] | | | 6 | 6 | 6 | 6 | 6 | 6 | 6 | 6 | 6 | 6 |
| | | Additive ratio of polymer A relative to particulate polymer [mass%] | | | 2 | 2 | 2 | 2 | 2 | 2 | 2 | 2 | 2 | 2 |
| Composition | Composition Heat-resistant fine particles | Fine particles A (inorganic particles) | Volume-average particle diameter ratio [%] Heat-resistant fire particles A/Particulate polymer | | 17 | 12 | 3 | 5 | 5 | 5 | 5 | 5 | 5 | 5 |
| | | | Volume-average particle diameter [µm] | | 1 | 0.7 | 0.2 | 0.3 | 0.3 | 0.3 | 0.3 | 0.3 | 0.3 | 0.3 |
| | | | Type | | Alumina | Alumina | Alumina | Alumina | Alumina | Alumina | Alumina | Alumina | Alumina | Alumina |
| | | | Mixing ratio of heat-resistant fire particles A and particulate polymer (mass ratio) | | 90:10 | 90:10 | 90:10 | 95:5 | 85:15 | 90:10 | 90:10 | 90:10 | 90:10 | 90:10 |
| | | Fine particles B (organic fine particles) | Chemical composition | | - | - | - | - | - | ST/EDMA (50/50) | MMA/EDMA (50/50) | ST/DVB (50/50) | ST/EDMA (25/75) | ST/EDMA (5/95) |
| | | | Volume-average particle diameter [µm] | | - | - | - | - | - | 6 | 6 | 6 | 6 | 6 |
| | | | Particulate polymer particle diameter/Fine particle B particle diameter [%] | | - | - | - | - | - | 100 | 100 | 100 | 100 | 100 |
| | | | Additive amount of heat-resistant fire particles B relative to 100 parts of particulate polymer [parts by mass] | | - | - | - | - | - | 100 | 100 | 100 | 100 | 100 |
| | Binder | Chemical composition | | | BA/AN/AMA/MAA/AGE | | | | | | | | | |
| | | Content (based on heat-resistant fine particles, parts by mass) | | | 5 | 5 | 5 | 5 | 5 | 5 | 5 | 5 | 5 | 5 |
| | | Volume-average particle diameter | | | 0.25 | 0.25 | 0.25 | 0.25 | 0.25 | 0.25 | 0.25 | 0.25 | 0.25 | 0.25 |
| Laminate | Functional layer coating site | | | | On separator | | | | | | | | | |
| | Separator substrate thickness [µm] | | | | 12 | 12 | 12 | 12 | 12 | 12 | 12 | 12 | 12 | 12 |
| | Heat-resistant fine particle layer thickness [µm] | | | | 2 | 2 | 2 | 2 | 2 | 2 | 2 | 2 | 2 | 2 |
| | Particulate polymer particle diameter/Heat-resistant fine particle layer thickness [-] | | | | 3 | 3 | 3 | 3 | 3 | 3 | 3 | 3 | 3 | 3 |
| Evaluation | Slurry stability | | | | A | A | A | A | A | A | A | A | A | A |
| | Process adhesiveness | | | | A | A | A | B | A | A | A | A | A | A |
| | Blocking resistance | | | | A | A | A | A | B | A | A | A | A | A |
| | Heat-shrinkage resistance | | | | C | B | A | A | A | A | A | A | A | A |
| | Cycle characteristics | | | | A | A | B | A | A | A | A | A | A | A |
| | Rate characteristics | | | | A | A | B | A | A | A | A | A | A | A |

**[Table 3]**

| | | | | | Example 19 | Example 20 | Example 21 | Example 22 | Example 23 | Example 24 | Example 25 | Example 26 | Example 27 |
|---|---|---|---|---|---|---|---|---|---|---|---|---|---|
| | Particulate polymer | Polymer A | Chemical composition | (Meth)acrylic acid ester monomer unit (type, mass%) | MMA/BA (97/2.6) | MMA/BA (97/2.6) | MMA/BA (97/2.6) | MMA/BA (97/2.6) | MMA/BA (97/2.6) | MMA/BA (97/2.6) | MMA/BA (97/2.6) | MMA/BA (97/2.6) | MMA/BA (97/2.6) |
| | | | | Acidic group-containing monomer unit (type, mass%) | AA (0.4) | AA (0.4) | AA (0.4) | AA (0.4) | AA (0.4) | AA (0.4) | AA (0.4) | AA (0.4) | AA (0.4) |
| | | | | Other units (type, mass%) | - | - | - | | - | - | - | - | - |
| | | | Glass-transition temperature [°C] | | 75 | 75 | 75 | 75 | 75 | 75 | 75 | 75 | 75 |
| | | | Acid value [mg KOH/g] | | 2.6 | 2.6 | 2.6 | 2.6 | 2.6 | 2.6 | 2.6 | 2.6 | 2.6 |
| | | | Weight-average molecular weight [-] | | 9500 | 9500 | 9500 | 9500 | 9500 | 9500 | 9500 | 9500 | 9500 |
| | | Polymer B | Chemical composition | Aromatic vinyl monomer unit (type, mass%) | ST (75) | ST (75) | ST (75) | ST (75) | ST (75) | ST (70) | ST (67.5) | ST (75) | ST (75) |
| | | | | Other units (type, mass%) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (24.5/0.5) | 2EHA/EDMA (29.5/0.5) | BA/EDMA (32/0.5) | 2EHA/EDMA (24.5/0.5) | 2EHA/EDMA (24.5/0.5) |
| | | | Glass-transition temperature [°C] | | 52 | 52 | 52 | 52 | 52 | 40 | 55 | 52 | 52 |
| | | Volume-average particle diameter [µm] | | | 8 | 6 | 6 | 6 | 6 | 6 | 6 | 6 | 6 |
| | | Additive ratio of polymer A relative to particulate polymer [mass%] | | | 2 | 2 | | 222 | | 2 | 2 | 2 | 2 |
| Composition | Heat-resistant fine particles | Fine particles A (inorganic fine particles) | Volume-average particle diameter ratio [%] Heat-resistant fire particles A/Particulate polymer | | 5 | 5 | 5 | 5 | 5 | 5 | 5 | 5 | 5 |
| | | | Volume-average particle diameter [µm] | | 0.3 | 0.3 | 0.3 | 0.3 | 0.3 | 0.3 | 0.3 | 0.3 | 0.3 |
| | | | Type | | Alumina | Alumina | Alumina | Alumina | Alumina | Alumina | Alumina | Alumina | Alumina |
| | | | Mixing ratio of heat-resistant fine particles A and particulate polymer (mass ratio) | | 90:10 | 90:10 | 90:10 | 90:10 | 90:10 | 90:10 | 90:10 | 90:10 | 90:10 |
| | | Fine particles B (organic fine particles) | Chemical composition | | ST/EDMA (50/50) | ST/EDMA (50/50) | ST/EDMA (50/50) | ST/EDMA (50/50) | ST/EDMA (50/50) | ST/EDMA (50/50) | ST/EDMA (50/50) | ST/EDMA (50/50) | ST/EDMA (50/50) |
| | | | Volume-average particle diameter [µm] | | 8 | 5 | 8 | 6 | 6 | 6 | 6 | 6 | 6 |
| | | | Particulate polymer particle diameter/Fine particle B particle diameter [%] | | 100 | 80 | 130 | 100 | 100 | 100 | 100 | 100 | 100 |
| | | | Additive amount of heat-resistart fine particles B relative to 100 parts of particulate polymer [parts by mass] | | 100 | 100 | 100 | 500 | 900 | 100 | 100 | 100 | 100 |
| | Binder | Chemical composition | | | BA/AN/AMA/MAA/AGE | | | | | | | SBR (BM-451B) | 2EHA/ST/ AMA/AA |
| | | Content (based on heat-resistant fire particles, parts by mass) | | | 5 | 5 | 5 | 5 | 5 | 5 | 5 | 5 | 5 |
| | | Volume-average particle diameter | | | 0.25 | 0.25 | 0.25 | 0.25 | 0.25 | 0.25 | 0.25 | 0.25 | 0.25 |
| Laminate | Functional layer coating site | | | | On separator | | | | | | | | |
| | Separator substrate thickness [µm] | | | | 12 | 12 | 12 | 12 | 12 | 12 | 12 | 12 | 12 |
| | Heat-resistant fire particle layer thickness [µm] | | | | 2 | 2 | 2 | 2 | 2 | 2 | 2 | 2 | 2 |
| | Particulate polymer particle diameter/Heat-resistant fine particle layer thickness [-] | | | | 4 | 3 | 3 | 3 | 3 | 3 | 3 | 3 | 3 |
| Evaluation | Slurry stability | | | | A | A | A | A | A | A | A | A | A |
| | Process adhesiveness | | | | B | B | B | B | B | A | A | A | A |
| | Blocking resistance | | | | A | B | A | A | A | B | A | A | A |
| | Heat-shrinkage resistance | | | | A | A | A | A | A | A | A | A | A |
| | Cycle characteristics | | | | A | A | A | B | B | A | A | A | A |
| | Rate characteristics | | | | A | A | A | B | C | A | A | A | A |

**[Table 4]**

| | | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|
| | Particulate polymer | Polymer | Chemical composition | (Meth)acrylic acid ester monomer unit (type, mass%) | MMA/BA (97/2.6) | No particulate polymer | - | MMA/BA (97.3/2.7) | MMA/BA (97/2.6) | MMA/BA (97/2.6) | No particulate polymer |
| | | | | Acidic group-containing monomer unit (type, mass%) | AA (0.4) | | - | - | AA (0.4) | AA (0.4) | |
| | | | | A Other units (type, mass%) | - | | - | - | - | - | |
| | | | | Glass-transition temperature [°C] | 75 | | None | 76 | 75 | 75 | |
| | | | | Acid value [mg KOH/g] | 2.6 | | None | 0 | 2.6 | 2.6 | |
| | | | | Weight-average molecular weight [-] | 9500 | | None | 10200 | 170000 | 170000 | |
| | | Polymer B | Chemical composition | Aromatic vinyl monomer unit (type, mass%) | ST (75) | | ST (75) | ST (75) | ST (74) | ST (74) | |
| | | | | Other units (type, mass%) | 2EHA/EDMA (24.5/0.5) | | 2EHA/EDMA (24.5/0.5) | 2EHA/EDMA (24.5/0.5) | 2EHA/EDMA/MAA (24.5/0.5/1) | 2EHA/EDMA/MAA (24.5/0.5/1) | |
| | | | Glass-transition temperature [°C] | | 52 | | 52 | 52 | 52 | 52 | |
| | | Volume-average particle diameter [µm] | | | 6 | | 6 | 6 | 0.7 | 0.7 | |
| | | Additive ratio of polymer A relative to particulate polymer [mass%] | | | 2 | | None | 2 | 2 | 2 | |
| Composition | Heat-resistant fine particles | Fine particles A (inorganic particles) | Volume-average particle diameter ratio [%] Heat-resistant fine particles A/Particulate polymer | | No heat-resistant fine particles | - | 5 | 5 | 43 | - | - |
| | | | Volume-average particle diameter [µm] | | | 0.3 | 03 | 0.3 | 0.3 | | 0.3 |
| | | | Type | | | Alumina | Alumina | Alumina | Alumina | - | Alumina |
| | | | Mixing ratio of heat-resistant fine particles A and particulate polymer (mass ratio) | | | | 90:10 | 90:10 | 90:10 | - | 90:10 |
| | | Fine particles B (organic fine particles) | Chemical composition | | | - | - | - | - | ST/EDMA (50/50) | ST/EDMA (50/50) |
| | | | Volume-average particle diameter [µm] | | | - | - | - | - | 6 | 6 |
| | | | Particulate polymer particle diameter/Fine particle B particle diameter [%] | | | - | - | - | - | 100 | - |
| | | | Additive amount of heat-resistant fire particles B relative to 100 parts of particulate polymer [parts by mass] | | | - | - | - | - | 100 | - |
| | Binder | Chemical composition | | | BA/AN/AMA/MAA/AGE | | | | | | |
| | | Content (based on heat-resistant fine particles, parts by mass) | | | 5 | 5 | 5 | 5 | 5 | 5 | 5 |
| | | Volume-average particle diameter | | | 0.25 | 0.25 | 0.25 | 0.25 | 0.25 | 0.25 | 0.25 |
| Laminate | Functional layer coating site | | | | On separator | | | | | | |
| | Separator substrate thickness [µm] | | | | 12 | 12 | 12 | 12 | 12 | 12 | 12 |
| | Heat-resistant fire particle layer thickness [µm] | | | | 2 | 2 | 2 | 2 | 2 | | 2 |
| | Particulate polymer particle diameter/Heat-resistant fire particle layer thickness [-] | | | | - | - | 3 | 3 | 0.35 | 0.35 | 0.35 |
| Evaluation | Slurry stability | | | | A | A | D | D | A | A | A |
| | Process adhesiveness | | | | A | D | A | A | C | D | D |
| | Blocking resistance | | | | C | A | C | C | B | A | A |
| | Heat-shrinkage resistance | | | | D | A | A | A | C | C | A |
| | Cycle characteristics | | | | C | C | C | C | C | B | C |
| | Rate characteristics | | | | A | C | C | C | C | B | C |

It can be seen from Tables 1 to 4 that process adhesiveness and blocking resistance are excellent for functional layers formed using the compositions for an electrochemical device functional layer according to Examples 1 to 27, which each contain a binder, heat-resistant fine particles, and a particulate polymer that has a volume-average particle diameter of more than 1.0 µm and not more than 10.0 µm and that includes a polymer A including a (meth)acrylic acid ester monomer unit and an acidic group-containing monomer unit and a polymer B that is a polymer having a different chemical composition from the polymer A.

It can also be seen that a balance of process adhesiveness and blocking resistance of an obtained functional layer could not be achieved in Comparative Example 1 in which heat-resistant fine particles were absent, Comparative Examples 2 and 7 in which a specific particulate polymer was absent, Comparative Examples 3 and 4 in which a particulate polymer lacking a polymer A satisfying a specific chemical composition was used, and Comparative Examples 5 and 6 in which a particulate polymer having a volume-average particle diameter of less than 1.0 µm was used.

### INDUSTRIAL APPLICABILITY

According to the present disclosure, it is possible to provide a composition for an electrochemical device functional layer that enables sufficiently high levels of both process adhesiveness and blocking resistance in an obtained functional layer.

Moreover, according to the present disclosure, it is possible to provide a functional layer for an electrochemical device having excellent process adhesiveness and blocking resistance, a laminate for an electrochemical device including this functional layer for an electrochemical device, and an electrochemical device including this laminate for an electrochemical device.

## Claims

1. A composition for an electrochemical device functional layer comprising a particulate polymer, a binder, and heat-resistant fine particles, wherein
the particulate polymer includes a polymer A and a polymer B,
the polymer A is a polymer including a (meth)acrylic acid ester monomer unit and an acidic group-containing monomer unit,
the polymer B is a polymer having a different chemical composition from the polymer A, and
the particulate polymer has a volume-average particle diameter of more than 1.0 µm and not more than 10.0 µm.

2. The composition for an electrochemical device functional layer according to claim 1, wherein the acidic group-containing monomer unit of the polymer A is a (meth)acrylic acid monomer unit.

3. The composition for an electrochemical device functional layer according to claim 1 or 2, wherein the polymer A has a glass-transition temperature of not lower than 60°C and not higher than 85°C.

4. The composition for an electrochemical device functional layer according to any one of claims 1 to 3, wherein the polymer A has an acid value of not less than 0.5 mg KOH/g and not more than 7 mg KOH/g.

5. The composition for an electrochemical device functional layer according to any one of claims 1 to 4, wherein the polymer A has a weight-average molecular weight of not less than 5,000 and not more than 100,000.

6. The composition for an electrochemical device functional layer according to any one of claims 1 to 5, wherein the particulate polymer includes the polymer A in a proportion of not less than 0.1 mass% and not more than 10 mass% based on the particulate polymer.

7. The composition for an electrochemical device functional layer according to any one of claims 1 to 6, wherein the polymer B includes an aromatic vinyl monomer unit.

8. The composition for an electrochemical device functional layer according to any one of claims 1 to 7, wherein the heat-resistant fine particles are inorganic fine particles, and the inorganic fine particles have a volume-average particle diameter that is not less than 2% and not more than 25% of the volume-average particle diameter of the particulate polymer.

9. The composition for an electrochemical device functional layer according to any one of claims 1 to 8, wherein the binder is a polymer including a (meth)acrylic acid ester monomer unit and having a different chemical composition from the polymer A and the polymer B.

10. A functional layer for an electrochemical device formed using the composition for an electrochemical device functional layer according to any one of claims 1 to 9.

11. The functional layer for an electrochemical device according to claim 10, wherein
the functional layer for an electrochemical device has a structure in which the particulate polymer is partially embedded in a heat-resistant fine particle layer that contains the heat-resistant fine particles, and
a ratio of the volume-average particle diameter of the particulate polymer relative to thickness of the heat-resistant fine particle layer is not less than 1.0 and not more than 5.0.

12. The composition for an electrochemical device functional layer according to claim 8, further comprising, as the heat-resistant fine particles, organic fine particles that have a volume-average particle diameter that is not less than 50% and not more than 150% of the volume-average particle diameter of the particulate polymer and that have a glass-transition temperature or melting point of 150°C or higher or do not have a glass-transition temperature or melting point within a range of 200°C or lower.

13. The composition for an electrochemical device functional layer according to claim 12, wherein an amount of the organic fine particles is not less than 20 parts by mass and not more than 1,000 parts by mass relative to the particulate polymer.

14. A functional layer for an electrochemical device formed using the composition for an electrochemical device functional layer according to claim 12 or 13.

15. The functional layer for an electrochemical device according to claim 14, wherein
the functional layer for an electrochemical device has a structure in which the particulate polymer and the organic fine particles serving as the heat-resistant fine particles are partially embedded in a heat-resistant fine particle layer that contains the heat-resistant fine particles, and
a ratio of the volume-average particle diameter of the particulate polymer relative to thickness of the heat-resistant fine particle layer is not less than 1.0 and not more than 5.0.

16. A laminate for an electrochemical device comprising: a substrate; and a functional layer for an electrochemical device formed on the substrate, wherein the functional layer for an electrochemical device is the functional layer for an electrochemical device according to any one of claims 10, 11, 14, and 15.

17. An electrochemical device comprising the laminate for an electrochemical device according to claim 16.
